# EUROPÄISCHE PATENTSCHRIFT

(11) **EP 3 891 420 B1**
(45) Veröffentlichungstag und Bekanntmachung des Hinweises auf die Patenterteilung: **20.09.2023**
(21) Anmeldenummer: 19802103.2
(22) Anmeldetag: 05.11.2019
(51) Int. Cl.: F16H 61/04, F16H 61/12

(54) **VERFAHREN UND STEUERGERÄT ZUM ERMITTELN EINES STELLWEGBEREICHES ZWISCHEN ZWEI SCHALTELEMENTHÄLFTEN EINES FORMSCHLÜSSIGEN SCHALTELEMENTES**
METHOD AND CONTROL UNIT FOR DETERMINING THE TRAVEL RANGE BETWEEN TWO GEAR SHIFT ELEMENT HALVES OF AN INTERLOCKING GEAR SHIFT ELEMENT
PROCÉDÉ ET APPAREIL DE COMMANDE PERMETTANT DE DÉTERMINER UNE PLAGE DE COURSES DE RÉGLAGE ENTRE DEUX MOITIÉS D'ÉLÉMENT DE COMMUTATION D'UN ÉLÉMENT DE COMMUTATION À COMPLÉMENTARITÉ DE FORME

(30) Priorität: 03.12.2018 DE 102018220869
(43) Veröffentlichungstag der Anmeldung: 13.10.2021
(73) Patentinhaber: ZF Friedrichshafen AG, 88046 Friedrichshafen (DE)
(72) Erfinder: ZERLAUT, Daniel, 88069 Tettnang (DE); JEHLE, Martina, 88079 Kressbronn (DE)
(74) Vertreter: ZF Friedrichshafen AG
(86) Internationale Anmeldenummer: PCT/EP2019/080143
(87) Internationale Veröffentlichungsnummer: WO 2020/114693

(56) Entgegenhaltungen:
- EP-A1- 2 784 356
- WO-A1-2010/034400
- DE-A1- 19 709 419
- DE-A1-102005 054 767
- DE-A1-102008 000 429
- DE-A1-102009 002 205
- DE-A1-102011 010 616
- DE-A1-102013 222 381

## Beschreibung

Die Erfindung betrifft ein Verfahren zum Ermitteln eines Stellwegbereiches zwischen zwei Schaltelementhälften eines formschlüssigen Schaltelementes gemäß der im Oberbegriff des Patentanspruches 1 näher definierten Art. Des Weiteren betrifft die Erfindung ein Steuergerät zur Durchführung des Verfahrens sowie ein entsprechendes Computerprogrammprodukt.

Aus der DE 10 2005 002 337 A1 ist ein als 8-Gang-Mehrstufengetriebe ausgeführtes Getriebe mit reibschlüssigen Schaltelementen bekannt. Die Schaltelemente sind als Lamellenkupplungen oder Lamellenbremsen ausgebildet. Bei Vorliegen einer Schaltanforderung für einen Übersetzungswechsel im Getriebe ist wenigstens eines der reibschlüssigen Schaltelemente aus dem Kraftfluss der Getriebevorrichtung abzuschalten und wenigstens ein weiteres reibschlüssiges Schaltelement in den Kraftfluss der Getriebevorrichtung zuzuschalten, um ein Drehmoment zu übertragen.

Generell kann bei einer Anforderung zum Öffnen eines reibschlüssigen Schaltelementes unabhängig von dem aktuell über das reibschlüssige Schaltelement geführten Drehmoment davon ausgegangen werden, dass das reibschlüssige Schaltelement tatsächlich in den geöffneten Betriebszustand übergeht. In gleichem Umfang ist auch eine Anforderung zum Schließen eines reibschlüssigen Schaltelementes mit vergleichsweise geringem Steuer- und Regelaufwand umsetzbar.

Aus diesem Grund ist eine einfache softwaretechnische Auswertung eines Ansteuerstromes eines Druckreglers eines reibschlüssigen Schaltelementes ausreichend. Bei Ermitteln eines entsprechenden Öffnungssteuersignals oder eines entsprechenden Schließsteuersignals zum Überführen des reibschlüssigen Schaltelementes in seinen geöffneten oder in seinen geschlossenen Betriebszustand ist über eine solche Auswertung auf einfache Art und Weise verifizierbar, ob ein Schalt- bzw. Gangwechsel erfolgreich war.

Nachteilhafterweise verursachen reibschlüssige Schaltelemente in geöffnetem Betriebszustand jedoch Schleppmomente, welche einen Gesamtwirkungsgrad eines Automatgetriebes in unerwünschtem Umfang beeinträchtigen.

Aus diesem Grund werden Getriebevorrichtungen, wie beispielsweise aus der DE 10 2008 000 429 A1 bekannt, in zunehmendem Umfang neben reibschlüssigen Schaltelementen auch mit formschlüssigen Schaltelementen ausgeführt. Derartige formschlüssige Schaltelemente weisen üblicherweise zwei Schaltelementhälften auf. Die Schaltelementhälften sind durch axiales Verstellen von zumindest einer bewegbaren Schaltelementhälfte gegenüber der anderen dann axial nicht verschiebbar ausgeführten Schaltelementhälfte im Bereich von Klauenelementen oder dergleichen miteinander formschlüssig in Eingriff bringbar. Dann ist das formschlüssige Schaltelement geschlossen und überträgt ein anliegendes Drehmoment. Des Weiteren besteht auch die Möglichkeit, dass beide Schaltelementhälften zueinander axial bewegbar ausgeführt sind.

Soll das formschlüssige Schaltelement aus dem Kraftfluss abgeschaltet werden, wird der Formschluss zwischen den Schaltelementhälften wiederum durch axiales Verschieben der bewegbaren Schaltelementhälfte gegenüber der axial nicht verschiebbaren Schaltelementhälfte aufgehoben. Der Grund für den Einsatz formschlüssiger Schaltelemente ist, dass im Gegensatz zu reibschlüssigen Schaltelementen im Bereich von geöffneten formschlüssigen Schaltelementen im Wesentlichen keine Schleppmomente auftreten, die den Gesamtwirkungsgrad eines Getriebes beeinträchtigen. Dabei ist jedoch zu berücksichtigen, dass formschlüssige Schaltelemente im Vergleich zu reibschlüssigen Schaltelementen nur nahe ihres Synchronpunktes aus einem geöffneten Betriebszustand, in welchem kein Drehmoment über die formschlüssigen Schaltelemente führbar ist, in ihren geschlossenen Betriebszustand überführbar sind.

Zusätzlich sind in den Kraftfluss einer Getriebevorrichtung zugeschaltete formschlüssige Schaltelemente mit geringen Schaltkräften aus dem Kraftfluss abschaltbar bzw. in ihren geöffneten Betriebszustand überführbar, wenn das anliegende Drehmoment einen entsprechend niedrigen Wert aufweist. Während Schaltvorgängen oder sogenannten Gangauslegevorgängen ist im Bereich eines Getriebes ein Kraftfluss zwischen einer Getriebeeingangswelle und einer Getriebeausgangswelle zu unterbrechen. Dabei ist ein formschlüssiges Schaltelement gegebenenfalls aus seinem geschlossenen Betriebszustand in seinen geöffneten Betriebszustand zu überführen. Aufgrund eines zu schnellen oder fehlerhaften Aufbaus des im Bereich des formschlüssigen Schaltelementes anliegenden Drehmomentes oder eines fehlerhaften Abbaus des anliegenden Drehmomentes ist das formschlüssige Schaltelement unter Umständen nicht in seinen geöffneten Betriebszustand überführbar. Darüber hinaus besteht auch die Möglichkeit, dass mechanische, hydraulische oder elektrische Fehlfunktionen das Öffnen eines formschlüssigen Schaltelementes verhindern. Deshalb gehen formschlüssige Schaltelemente im Gegensatz zu reibschlüssigen Schaltelementen bei Vorliegen eines entsprechenden Öffnungssteuersignals nicht zwangsläufig in einen geöffneten Betriebszustand über.

Zusätzlich besteht auch die Möglichkeit, dass ein geöffnetes formschlüssiges Schaltelement nicht innerhalb gewünscht kurzer Betriebszeiten in seinen geschlossenen Betriebszustand überführbar ist. Dies ist beispielsweise dann der Fall, wenn der angestrebte Formschluss zwischen den Schaltelementhälften beispielsweise aufgrund einer sogenannten Zahn-auf-Zahnstellung nicht herstellbar ist. Bei einer solchen Zahn-auf-Zahnstellung liegen Klauenelemente der Schaltelementhälften im Bereich ihrer Stirnseiten aneinander an und die Differenzdrehzahl zwischen den Schaltelementhälften ist gleich null. Eine solche Zahn-auf-Zahnstellung löst sich erst dann auf, wenn ein am formschlüssigen Schaltelement anliegendes Drehmoment größer ist als das Haftreibungsmoment zwischen den Stirnflächen der Klauenelemente der Schaltelementhälften.

Des Weiteren kann das Herstellen eines vollständigen Formschlusses bzw. das vollständige Schließen eines formschlüssigen Schaltelementes auch durch ein sogenanntes Flankenklemmen zwischen den Flanken der Klauenelemente verhindert werden. Bei einem solchen Flankenklemmen weisen die beiden Schaltelemente eine bestimmte axiale Überdeckung im Bereich ihrer Klauenelemente auf. Jedoch ist die Haftreibung zwischen den aneinander anliegenden Flanken der Klauenelemente der Schaltelementhälften derart hoch, dass die in Schließrichtung an den Schaltelementen angreifende Schließkraft nicht ausreichend ist, um die Haftreibung zu überwinden und das formschlüssige Schaltelement vollständig zu schließen.

Bleibt ein formschlüssiges Schaltelement während eines Schließvorganges in einer sogenannten Zwischenposition hängen, die zwischen einem vollständig geöffneten Betriebszustand und einem vollständig geschlossenen Betriebszustand angeordnet ist, wird mittels verschiedener Vorgehensweisen versucht, diese unerwünschte Zwischenposition aufzulösen. Problematisch dabei ist jedoch, dass die Vorgehensweisen zum Auflösen einer Zahn-auf-Zahnstellung oder eines Flankenklemmens sich stark voneinander unterscheiden und bei falscher Anwendung einen Fahrkomfort beeinträchtigen sowie Schaltzeiten erheblich verlängern. Dies resultiert aus der Tatsache, dass die Vorgehensweise zum Auflösen einer Zahn-auf-Zahnstellung ein Flankenklemmen verstärkt und die Vorgehensweise zum Auflösen eines Flankenklemmens wiederum eine Zahn-auf-Zahnstellung aufrechterhält.

Um den jeweils vorliegenden Betriebszustand eines formschlüssigen Schaltelementes überwachen zu können, werden Sensoren verbaut. Diese Sensoren weisen beispielsweise einen Permanentmagneten und eine Messeinrichtung zum Sensieren des Magnetfeldes des Permanentmagneten auf. Zusätzlich umfassen die Sensoren eine das Magnetfeld des Permanentmagneten in Abhängigkeit der Betriebszustände der Schaltelementhälften beeinflussende ferromagnetische Geberkontur. Dabei sind verschiedene Magnetfeld sensierende Elemente bekannt, wie auf einem Halleffekt basierende Elemente oder Magnetwiderstandselemente. Magnetfeldsensoren weisen generell Magnetfeld sensierende Elemente oder andere elektronische Komponenten auf, wobei einige Magnetfeldsensoren Permanentmagneten in einer sogenannten back-biased Anordnung umfassen.

Derartige Magnetfeldsensoren stellen elektrische Signale zur Verfügung, die den Zustand eines sensierten Magnetfeldes wiedergeben. Bei einigen Ausführungen wirken Magnetfeldsensoren mit ferromagnetischen Objekten zusammen. Über die Magnetfeldsensoren werden Magnetfeldschwankungen ermittelt, die von einem Objekt verursacht werden, das durch das Magnetfeld eines Magneten eines Magnetfeldsensors bewegt wird. Dabei variiert das über den magnetischen Feldsensor überwachte magnetische Feld bekannterweise auch in Abhängigkeit einer Form oder eines Profils des bewegten ferromagnetischen Objektes. Die Positionsbestimmung der Schaltelementhälften wird direkt aus den Rohsignalen der Sensoren mit Hilfe von applizierbaren Schwellen berechnet.

Nachteilhafterweise bewirkt diese Vorgehensweise, dass alle Toleranzen des Sensors und des Sensiersystems sowie die produktionsbedingten Streuungen in die Positionsbestimmung einfließen. Dies führt dazu, dass die Positionsbestimmung der Schaltelementhälften nicht die für einen Betrieb eines Getriebes erforderliche Genauigkeit aufweist.

Die mangelnde Genauigkeit bei der Bestimmung der Position der Schaltelementhälften zueinander während eines Öffnungs- oder eines Schließvorganges bewirkt auch, dass bei einem Hängenbleiben eines formschlüssigen Schaltelementes, insbesondere während eines Schließvorganges gegebenenfalls nicht die richtige Vorgehensweise zur Auflösung der Zwischenposition des Schaltelementes durchgeführt wird. Die DE 197 09 419 A1 offenbart ein Verfahren, bei dem eine Zahn-auf-Zahnstellung erkannt wird, wenn über einen Sensor innerhalb eines Stellwegbereiches einer bewegbaren Schaltelementhälfte zwischen einem geöffneten Zustand und einem geschlossenen Zustand des Schaltelementes ermittelt wird, dass die Stellbewegung der bewegbaren Schaltelementhälfte in Schließrichtung null ist.

Des Weiteren offenbart die DE 10 2005 054 767 A1 ein Verfahren zur Steuerung eines automatisierten, unsynchronisierten Zahnräderwechselgetriebes eines Kraftfahrzeugs und eine Steuerungseinrichtung.

Darüber hinaus ist aus der DE 10 2013 222 381 A1, auf welcher die zweiteilige Anspruchsfassung basiert, ein Verfahren zur Ausführung einer Schaltung bekannt. Bei der Ausführung der Schaltung wird ein erstes, reibschlüssiges Schaltelement geöffnet und ein zweites, formschlüssiges Schaltelement geschlossen.

Ausgehend von dem vorstehend beschriebenen Stand der Technik liegt der Erfindung die Aufgabe zugrunde, ein Verfahren zum Ermitteln eines Stellwegbereiches zwischen zwei Schaltelementhälften eines formschlüssigen Schaltelementes zu schaffen, mittels dem insbesondere ein Stellwegbereich eines formschlüssigen Schaltelementes bestimmbar ist, innerhalb dem eine Zahn-auf-Zahnstellung auftreten kann. Zusätzlich sollen ein Steuergerät, welches zur Durchführung des Verfahrens ausgebildet ist und ein Computerprogrammprodukt zur Durchführung des Verfahrens angegeben werden.

Aus verfahrenstechnischer Sicht erfolgt eine Lösung dieser Aufgabe ausgehend vom Oberbegriff des Patentanspruches 1 in Verbindung mit dessen kennzeichnenden Merkmalen.

Diese Aufgabe wird zudem durch ein Steuergerät nach Anspruch 12 und ein Computerprogrammpodukt nach Anspruch 13 gelöst.

Vorteilhafte Weiterbildungen sind Gegenstand der Unteransprüche sowie der nachfolgenden Beschreibung.

Es wird ein Verfahren zum Ermitteln eines Stellwegbereiches zwischen zwei Schaltelementhälften eines formschlüssigen Schaltelementes vorgeschlagen. Die Schaltelementhälften sind durch Bewegen von wenigstens einer der Schaltelementhälften in Bezug auf die andere Schaltelementhälfte miteinander formschlüssig in Eingriff oder außer Eingriff bringbar. Die Ermittlung des Stellwegbereiches erfolgt während eines Schließens des formschlüssigen Schaltelementes und bei Vorliegen einer Zahn-auf-Zahnstellung zwischen den beiden Schaltelementhälften. Eine Stellbewegung der wenigstens einen bewegbaren Schaltelementhälfte in Bezug auf die andere Schaltelementhälfte wird mittels eines Sensors überwacht.

Unter dem Begriff formschlüssiges Schaltelement werden vorliegend beispielsweise Klauenschaltelemente subsumiert, die jeweils ein Drehmoment über eine formschlüssige Verbindung übertragen. Des Weiteren werden nachfolgend unter dem Begriff reibschlüssiges Schaltelement vorliegend als Kupplung oder Bremsen ausgeführte Schaltelemente subsumiert, die jeweils ein Drehmoment über eine reibschlüssige Verbindung übertragen. Dabei variiert jeweils das über ein solches reibschlüssiges Schaltelement übertragbare Drehmoment in Abhängigkeit der jeweils am reibschlüssigen Schaltelement anliegenden Schließkraft und ist bevorzugt stufenlos einstellbar.

Die Schließkraft korrespondiert beispielsweise mit einem am Schaltelement anliegenden Hydraulikdruck. Im Unterschied hierzu ist das jeweils über ein formschlüssiges Schaltelement übertragbare Drehmoment nicht stufenlos einstellbar.

Die Erfindung umfasst nun die technische Lehre, dass eine Zahn-auf-Zahnstellung erkannt wird, wenn über den Sensor innerhalb eines Stellwegbereiches der wenigstens einen bewegbaren Schaltelementhälfte zwischen einem geöffneten Zustand und einem geschlossenen Zustand des Schaltelementes ermittelt wird, dass die Stellbewegung der wenigstens einen bewegbaren Schaltelementhälfte in Schließrichtung null ist. Des Weiteren wird geprüft, ob ein Verhältnis zwischen einer am Schaltelement anliegenden Schließkraft und einer an den Schaltelementhälften angreifenden Radialkraft, die aus einem am Schaltelement anliegenden Drehmoment resultiert, innerhalb eines Wertebereiches liegt, innerhalb dem die Zahn-auf-Zahnstellung mit hoher Wahrscheinlichkeit auftritt. Des Weiteren wird dann eine Zahn-auf-Zahnstellung ermittelt, wenn nach einem Reduzieren der Schließkraft und/oder nach einem Erhöhen des anliegenden Drehmomentes über den Sensor eine Stellbewegung der wenigstens einen bewegbaren Schaltelementhälfte in Schließrichtung erkannt wird.

Mittels der erfindungsgemäßen Vorgehensweise ist auf einfache Art und Weise eindeutig unterscheidbar, ob das formschlüssige Schaltelement während einer Betätigung wegen einer Zahn-auf-Zahnstellung oder wegen eines Flankenklemmens innerhalb des aktuellen Stellwegbereiches nicht im angeforderten Umfang in Richtung des geschlossenen oder des geöffneten Betriebszustandes bewegt wurde.

Mit der exakten Kenntnis des Stellwegebereiches zwischen zwei Schaltelementhälften eines formschlüssigen Schaltelementes, innerhalb welchem eine Zahn-auf-Zahnstellung auftritt, ist die zur Auflösung einer Zahn-auf-Zahnstellung vorgesehene Maßnahme auslösbar und die Zahn-auf-Zahnstellung in gewünschtem Umfang beendbar. Dadurch ist beispielsweise eine Schaltung innerhalb eines Getriebes, an dem das formschlüssige Schaltelement beteiligt ist, auf einfache Art und Weise innerhalb kurzer Schaltzeiten umsetzbar.

Zusätzlich besteht auch die Möglichkeit, wenn das Schaltelement aufgrund eines Flankenklemmens nicht im angeforderten Umfang in seinen geschlossenen Betriebszustand überführbar ist, das Flankenklemmen wiederum durch die geeigneten Maßnahmen aufzulösen und das formschlüssige Schaltelement innerhalb kurzer Betriebszeiten in seinen geschlossenen Betriebszustand überführen zu können. Tritt das Flankenklemmen beispielsweise bei einem erkannten Überdeckungsgrad größer als ein Schwellwert auf, kann unter Umständen auch ganz auf eine auflösende Maßnahme des Flankenklemmens verzichtet werden. Dabei entspricht dieser Schwellwert einer Überdeckungsgrenze, ab welcher das jeweils am formschlüssigen Schaltelement anliegende oder anzulegende Drehmoment über das formschlüssige Schaltelement übertragbar ist, ohne im Bereich der Flanken unzulässig hohe Belastungen zu verursachen.

Die Ermittlung des Stellwegbereiches zwischen den Schaltelementhälften wird gemäß der vorliegenden Erfindung gestartet, wenn über den Sensor eine Stellbewegung der wenigstens einen bewegbaren Schaltelementhälfte in Schließrichtung gleich null bestimmt wird und ein Verlauf des Signals des Sensors innerhalb eines Zeitraums, der gleich einem vordefinierten Zeitraum oder länger als der definierte Zeitraum ist, größer als oder gleich einem vordefinierten unteren Schwellwert und kleiner als oder gleich einem vordefierten oberen Schwellwert ist.

Somit wird die Ermittlung des Stellwegbereiches zwischen den Schaltelementhälften erst dann gestartet, wenn das Signal des Sensors innerhalb eines vordefinierten Zeitraumes die vordefinierte Untergrenze nicht unterschreitet und die vordefinierte obere Grenze nicht überschreitet.

Dadurch wird die Ermittlung des Stellwegbereiches erst dann durchgeführt, wenn das Vorliegen einer Zahn-auf-Zahnstellung wahrscheinlich ist und die Zwischenposition, für die die Ermittlung durchgeführt wird, durch eine ausreichende Stabilität gekennzeichnet ist.

Wird die Ermittlung des mit einer Zahn-auf-Zahnstellung korrespondierenden Stellwegbereiches zwischen den Schaltelementhälften erstmals durchgeführt, dann begrenzen der minimale Wert des Verlaufes des Signals des Sensors und der maximale Wert des Verlaufes des Signals des Sensors bei einer vorteilhaften Variante des erfindungsgemäßen Verfahrens den Stellwegbereich zwischen den Schaltelementhälften.

Das bedeutet, dass die beiden über den Sensor erstmals ermittelten Extremwerte die Grenzen des Stellwegbereiches der Schaltelementhälfte bilden, innerhalb dem eine Zahn-auf-Zahnstellung zu erwarten ist.

Die Grenzen des Stellwegbereiches werden bei einer weiteren vorteilhaften Variante des erfindungsgemäßen Verfahrens in Abhängigkeit weiterer minimaler und maximaler Werte des Verlaufes des Signals des Sensors verändert, wenn die weiteren minimalen und maximalen Werte des Verlaufes des Signals des Sensors von den zuvor ermittelten minimalen und maximalen Werten des Verlaufes des Signals des Sensors jeweils größer als ein Betrag eines Schwellwerts abweichen. Dabei werden die weiteren minimalen und maximalen Werte des Verlaufes des Signals des Sensors jeweils während weiterer Ermittlungen des Stellwegbereiches zwischen den Schaltelementhälften für eine erkannte Zahn-auf-Zahnstellung bestimmt.

Mittels dieser Vorgehensweise wird der Stellwegbereich mit geringem Aufwand vergrößert bzw. erweitert, wenn kleinere Minimalpositionen der Schaltelementhälfte und/oder größere Maximalpositionen der Schaltelementhälfte bestimmt werden.

Bei einer weiteren vorteilhaften Variante des erfindungsgemäßen Verfahrens werden die Grenzen des Stellwegbereiches in Abhängigkeit der jeweils aktuell ermittelten minimalen und maximalen Werte des Verlaufes des Signals des Sensors variiert. Dabei werden die minimalen und maximalen Werte des Verlaufes des Signals des Sensors dann verändert, wenn ein Abstand zwischen dem durch die aktuell ermittelten minimalen und maximalen Wertes Werte des Verlaufes des Signals des Sensors definierten Stellwegbereich und dem Stellwegbereich, der zuvor bestimmt wurde, kleiner als oder gleich einem vordefiniertem Schwellwert ist. Damit wird auf einfache Art und Weise plausibilisiert, ob der bisherige Stellwegbereich bzw. Zahn-auf-Zahnbereich und der neu erkannte Stellwegbereich bzw. Zahn-auf-Zahnbereich zu weit auseinander liegen.

Liegen die Stellwegbereiche zu weit auseinander und wurde der zuvor ermittelte Stellwegbereich in Abhängigkeit einer Anzahl erkannter Zahn-auf-Zahnstellungen festgelegt, die kleiner als ein Schwellwert ist, werden bei einer weiteren vorteilhaften Variante des erfindungsgemäßen Verfahrens die Grenzen des zuvor ermittelten Stellwegbereiches verworfen. Der Stellwegbereich wird dann bei einer späteren Ermittlung einer Zahn-auf-Zahnstellung erneut bestimmt.

Damit wird wiederum auf einfache Art und Weise eine Fehlermittlung des Stellwegbereiches vermieden, wenn erst eine geringe Anzahl an Zahn-auf-Zahnstellung erkannt wurde.

Die Bestimmung des Stellwegbereiches wird bei einer vorteilhaften Variante des erfindungsgemäßen Verfahrens über Lebensdauer des formschlüssigen Schaltelementes mit der gewünscht hohen Genauigkeit gewährleistet. Dafür wird der Stellwegbereich durch Variieren der Grenzen in Abhängigkeit der ermittelten minimalen und maximalen Werte des Verlaufes des Signals des Sensors solange vergrößert, bis ein Abstand zwischen den Grenzen des Stellwegbereiches größer oder gleich als ein vordefinierter maximaler Wert ist.

Der jeweils für eine Zahn-auf-Zahnstellung ermittelte minimale Wert des Verlaufes des Signals des Sensors und der ebenfalls ermittelte maximale Wert des Verlaufes des Signals des Sensors werden bei einer Variante des erfindungsgemäßen Verfahrens jeweils den Grenzen eines Stellwegbereiches gegenübergestellt, der bereits in Abhängigkeit einer Anzahl von ermittelten Zahn-auf-Zahnstellungen größer als ein Schwellwert bestimmt wurde. Dabei werden die Grenzen des Stellwegbereiches um einen Offset vergrößert oder verkleinert, wenn der ermittelte minimale Wert und der ermittelte maximale Wert des Verlaufes des Signals des Sensors jeweils von der unteren Grenze oder von der oberen Grenze des Stellwegbereiches um Werte größer als ein Betrag eines Schwellwertes abweichen.

Die Grenzen des Stellwegbereiches werden bei einer Variante des erfindungsgemä-βen Verfahrens jeweils in Abhängigkeit des für eine Zahn-auf-Zahnstellung ermittelten minimalen Wertes des Verlaufes des Signals des Sensors oder des ebenfalls ermittelten maximalen Wertes des Verlaufes des Signals des Sensors variiert. Dies ist dann der Fall, wenn der Abstand der Grenzen des Stellwegbereiches bereits den maximalen Wert erreicht oder überschritten hat und der minimale Wert oder der maximale Wert des Verlaufes des Signals des Sensors außerhalb des Stellwegbereiches liegt. Die Grenzen des Stellwegbereiches werden dann jeweils so aufeinander abgestimmt angepasst, dass der Abstand zwischen den Grenzen des angepassten Stellwegbereiches den maximalen Abstand im Wesentlichen nicht übersteigt. Damit wird gewährleistet, dass die Erkennung einer Zahn-auf-Zahnstellung mit geringem Aufwand über der Lebensdauer eines formschlüssigen Schaltelementes mit der gewünscht hohen Genauigkeit ermittelt wird.

Bei einer weiteren vorteilhaften Variante des erfindungsgemäßen Verfahrens werden ausgehend von zwei vordefinierten Stellwegbereichen zwischen den Schaltelementhälften, die sich überlappen, zwei Stellwegbereiche ermittelt. Dies ist dann der Fall, wenn jede der Schaltelementhälften mit zwei Gruppen von Klauenelementen ausgebildet ist. Dabei weist die erste Gruppe der Klauenelemente in Stellrichtung der wenigstens einen bewegbaren Schaltelementhälfte eine größere Länge auf als die Klauenelemente der zweiten Gruppe. Zusätzlich sind die Klauenelemente der beiden Gruppen in Umfangsrichtung der Schaltelementhälften abwechselnd nebeneinander angeordnet.

Damit sind Zahn-auf-Zahnstellungen eines solchen formschlüssigen Schaltelementes, die sowohl zwischen den längeren Klauenelementen der Schaltelementhälfte als auch zwischen den längeren Klauenelementen der einen Schaltelementhälfte und den kürzeren Klauenelementen der anderen Schaltelementhälfte auftreten können, in gewünschtem Umfang mit geringem Aufwand ermittelbar.

Dabei besteht die Möglichkeit, dass die Grenzen der Stellwegbereiche solange angepasst werden, bis alle Werte des Signals des Sensors, die für Zahn-auf-Zahnstellungen ermittelt werden und innerhalb des Überlappungsbereiches der beiden Stellwegbereiche liegen, lediglich einem der beiden Stellwegbereiche zugeordnet sind. Dadurch wird wiederum gewährleistet, dass Zahn-auf-Zahnstellungen für die letztgenannten Betriebszustände eines mit einer sogenannten Fangzahnklaue ausgeführten Schaltelementes jeweils dem einen Stellwegbereich oder dem anderen Stellwegbereich zugeordnet werden können.

Mittels einer weiteren vorteilhaften Variante des erfindungsgemäßen Verfahrens werden Fehlermittlungen mit geringem Aufwand vermieden. Hierfür ist es vorgesehen, dass der Stellwegbereich eine Mindestbreite aufweist und mit einem Wertebereich für Signale des Sensors korrespondiert, die für Zahn-auf-Zahnstellungen zwischen den längeren Klauenelementen der Schaltelementhälften ermittelt werden. Dabei ist die Mindestbreite dieses Stellwegbereiches derart vorgesehen, dass die jeweils für eine Zahn-auf-Zahnstellung ermittelten minimalen Werte und maximalen Werte des Signals vom Stellwegbereich umfasst werden. Zusätzlich wird die Mindestbereite auch in Abhängigkeit von Abweichungen der Signale festgelegt, die aus lastbedingten Bewegungen des gesamten Schaltelementes gegenüber dem Sensor und aus einem toleranzbedingten Sensorverhalten resultieren.

Die Erfindung betrifft weiterhin ein Steuergerät nach Anspruch 12. Das Steuergerät umfasst beispielsweise Mittel, die der Durchführung des erfindungsgemäßen Verfahrens dienen. Bei diesen Mitteln kann es sich um hardwareseitige Mittel und um softwareseitige Mittel handeln. Die hardwareseitigen Mittel des Steuergeräts bzw. der Steuerungseinrichtung sind beispielsweise Datenschnittstellen, um mit den an der Durchführung des erfindungsgemäßen Verfahrens beteiligten Baugruppen des Fahrzeugantriebsstranges Daten auszutauschen. Weitere hardwareseitige Mittel sind beispielsweise ein Speicher zur Datenspeicherung und ein Prozessor zur Datenverarbeitung. Softwareseitige Mittel können unter anderem Programmbausteine zur Durchführung des erfindungsgemä-βen Verfahrens sein.

Das Steuergerät ist zur Durchführung des erfindungsgemäßen Verfahrens mit zumindest einer Empfangsschnittstelle ausführbar, die ausgebildet ist, Signale von Signalgebern zu empfangen. Die Signalgeber können beispielsweise als Sensoren ausgebildet sein, die Messgrößen erfassen und an das Steuergerät übermitteln. Ein Signalgeber kann auch als Signalfühler bezeichnet werden. So kann die Empfangsschnittstelle von einem Signalgeber ein Signal empfangen, über welches signalisiert wird, dass ein Stellwegbereich zwischen zwei Schaltelementhälften eines formschlüssigen Schaltelementes zu bestimmen ist. Das Signal kann beispielsweise durch eine Bedienperson erzeugt werden, indem diese ein Bedienelement betätigt, über welches eine solche Ermittlung angefordert werden kann. Des Weiteren kann das Signal auch von einer Fahrstrategie erzeugt werden, die im Bereich des Steuergerätes oder im Bereich eines weiteren Steuergerätes des Fahrzeugantriebsstranges aktiviert ist und durchgeführt wird.

Das Steuergerät kann zudem eine Datenverarbeitungseinheit aufweisen, um die empfangenen Eingangssignale bzw. die Informationen der empfangenen Eingangssignale auszuwerten und/oder zu verarbeiten.

Auch kann das Steuergerät mit einer Sendeschnittstelle ausgeführt sein, die ausgebildet ist, Steuersignale an Stellglieder auszugeben. Unter einem Stellglied sind Aktoren zu verstehen, die die Befehle des Steuergeräts umsetzen. Die Aktoren können beispielsweise als elektromagnetische Ventile ausgebildet sein.

Wird während der Betätigung des formschlüssigen Schaltelementes durch das Steuergerät erkannt oder anhand von empfangenen Eingangssignalen ermittelt, dass ein Stellwegbereich zwischen zwei Schaltelementhälften des formschlüssigen Schaltelementes zu bestimmen ist, dann bestimmt das Steuergerät anhand von erfassten Eingangssignalen eine entsprechende Anforderung und löst eine entsprechende Ermittlung aus. Die Schaltelementhälften sind durch Bewegen von wenigstens einer Schaltelementhälfte in Bezug auf die andere Schaltelementhälfte miteinander formschlüssig in Eingriff oder außer Eingriff bringbar. Dabei wird die Ermittlung während eines Schließens des formschlüssigen Schaltelementes und bei Vorliegen einer Zahn-auf-Zahnstellung zwischen den beiden Schaltelementhälften mittels des Steuergerätes durchgeführt. Zusätzlich wird eine Stellbewegung der wenigstens einen bewegbaren Schaltelementhälfte in Bezug auf die andere Schaltelementhälfte mittels eines Sensors überwacht.

Dabei ist das erfindungsgemäße Steuergerät derart ausgeführt, dass eine Zahn-auf-Zahnstellung erkannt wird, wenn über den Sensor innerhalb eines Stellwegbereiches zwischen den Schaltelementhälften zwischen einem geöffneten Zustand und einem geschlossenen Zustand des Schaltelementes ermittelt wird, dass die Stellbewegung zwischen den Schaltelementhälften in Schließrichtung null ist. Zusätzlich wird über das Steuergerät dann die Zahn-auf-Zahnstellung erkannt, wenn ein Verhältnis zwischen einer am Schaltelement anliegenden Schließkraft und einer an den Schaltelementhälften angreifenden Radialkraft innerhalb eines Wertebereiches, innerhalb dem eine Zahn-auf-Zahnstellung sehr wahrscheinlich ist. Die Radialkraft resultiert dabei aus einem am Schaltelement anliegenden Drehmoment. Des Weiteren erkennt das Steuergerät dann eine Zahn-auf-Zahnstellung, wenn nach einem Reduzieren der Schließkraft und/oder nach einem Erhöhen des am Schaltelement anliegenden Drehmomentes über den Sensor eine Bewegung der verstellbaren Schaltelementhälfte in Schließrichtung bestimmt wird.

Dadurch wird wiederum auf einfache Art und Weise gewährleistet, dass eine Zahn-auf-Zahnstellung und der damit korrespondierende Stellwegbereich der Schaltelementhälften eines formschlüssigen Schaltelementes mit einer hohen Genauigkeit erkannt und ermittelt werden, um einerseits einen hohen Fahrkomfort zu gewährleisten und andererseits Schaltungen innerhalb gewünscht kurzer Schaltzeiten durchführen zu können. Des Weiteren sind damit auch irreversible Schädigungen im Bereich eines formschlüssigen Schaltelementes auf einfache Art und Weise vermeidbar.

Die Ermittlung des Stellwegbereiches zwischen den Schaltelementhälften wird gemäß der vorliegenden Erfindung durch das Steuergerät gestartet, wenn über den Sensor eine Stellbewegung der wenigstens einen bewegbaren Schaltelementhälfte in Schließrichtung gleich null bestimmt wird und ein Verlauf des Signals des Sensors innerhalb eines Zeitraumes, der gleich einem vordefinierten Zeitraum oder länger als der vordefinierte Zeitraum ist, größer als oder gleich einem vordefinierten unteren Schwellwert und kleiner als oder gleich einem vordefinierten oberen Schwellwert ist.

Somit wird die Ermittlung des Stellwegbereiches zwischen den Schaltelementhälften erst dann gestartet, wenn das Signal des Sensors innerhalb eines vordefinierten Zeitraumes die vordefinierte Untergrenze nicht unterschreitet und die vordefinierte obere Grenze nicht überschreitet.

Dadurch wird die Ermittlung des Stellwegbereiches erst dann durchgeführt, wenn das Vorliegen einer Zahn-auf-Zahnstellung wahrscheinlich ist und die Zwischenposition, für die die Ermittlung durchgeführt wird, durch eine ausreichende Stabilität gekennzeichnet ist.

Die zuvor genannten Signale sind nur als beispielhaft anzusehen und sollen die Erfindung nicht beschränken. Die erfassten Eingangssignale und die ausgegebenen Steuersignale können über einen Fahrzeugbus beispielsweise über einen CAN-BUS übertragen werden. Die Steuerungseinrichtung bzw. das Steuergerät kann beispielsweise als zentrales elektronisches Steuergerät des Fahrzeugantriebsstranges oder als elektronisches Getriebesteuergerät ausgebildet sein.

Die erfindungsgemäße Lösung lässt sich auch als Computerprogrammprodukt verkörpern, welches, wenn es auf einem Prozessor einer Steuerungseinrichtung läuft, den Prozessor softwaremäßig anleitet, die zugeordneten erfindungsgegenständlichen Verfahrensschritte durchzuführen. In diesem Zusammenhang wird auch auf ein computerlesbares Medium verwiesen, auf dem ein vorstehend beschriebenes Computerprogrammprodukt abrufbar gespeichert ist.

Die Erfindung wird durch die vorliegenden Ansprüche bestimmt. Die Bezugnahme der Ansprüche auf die Zeichnungen durch Verwendung von Bezugszeichen soll den Schutzumfang der Ansprüche nicht beschränken.

Bevorzugte Weiterbildungen ergeben sich aus den Unteransprüchen und der nachfolgenden Beschreibung. Ein Ausführungsbeispiel der Erfindung wird, ohne hierauf beschränkt zu sein, anhand der Zeichnung näher erläutert. Dabei zeigt:
- Fig. 1: eine schematische Darstellung eines Fahrzeugantriebsstranges mit einer Antriebsmaschine, mit einem Getriebe und mit einem Abtrieb;
- Fig. 2: eine tabellarische Schaltlogik des in Fig. 1 gezeigten Getriebes;
- Fig. 3a bis Fig. 3e: jeweils verschiedene Betriebszustände eines stark schematisiert dargestellten formschlüssigen Schaltelementes zwischen einem vollständig geöffneten Zustand und einem vollständig geschlossenen Zustand;
- Fig. 4a bis Fig. 4f: jeweils Fig. 3a entsprechende Darstellungen verschiedener Betriebszustände eines formschlüssigen Schaltelementes, dessen Klauenelemente mit unterschiedlicher Länge ausgebildet sind;
- Fig. 5a: einen Stellweg des formschlüssigen Schaltelementes gemäß Fig. 4a zwischen einem vollständig geschlossenen Zustand und einem vollständig geöffneten Betriebszustand sowie einen ersten vordefinierten Stellwegbereich und einen zweiten vordefinierten Stellwegbereich, innerhalb den Zahn-auf-Zahnstellungen zwischen längeren Klauenelementen sowie zwischen längeren und kürzeren Klauenelementen der Schaltelementhälften erwartet werden;
- Fig. 5b bis Fig. 5d: jeweils eine Fig. 5a entsprechende Darstellung, wobei Grenzen der Stellwegbereiche sukzessive so angepasst werden, dass mit Zahn-auf-Zahnstellungen korrespondierende Sensorsignale zunehmend jeweils nur einem der Stellbereiche zugeordnet sind;
- Fig. 6a bis Fig. 6d: grafische Darstellungen einer weiteren Vorgehensweise, wie Stellwegbereiche für Zahn-auf-Zahnstellungen eines formschlüssigen Schaltelementes gemäß Fig. 4a exakt ermittelbar sind;
- Fig. 7a bis Fig. 7f: jeweils eine Fig. 6a bis Fig. 6d entsprechende Darstellung einer weiteren Vorgehensweise, wie Stellwegbereiche für Zahn-auf-Zahnstellungen eines Schaltelementes gemäß Fig. 4a mit der gewünschten Genauigkeit ermittelbar sind;
- Fig. 8a und Fig. 8b eine Fig. 6a bis 6d: entsprechende Darstellung einer weiteren Vorgehensweise zur definierten Ermittlung von Stellwegbereichen für Zahnauf-Zahnstellungen eines Schaltelementes gemäß Fig. 4a; und
- Fig. 9: mehrere Verläufe eines Signals eines Sensors, mittels welchem eine Stellwegposition einer Schaltelementhälfte eines formschlüssigen Schaltelementes gemäß Fig. 3a bzw. Fig. 4a überwachbar ist.

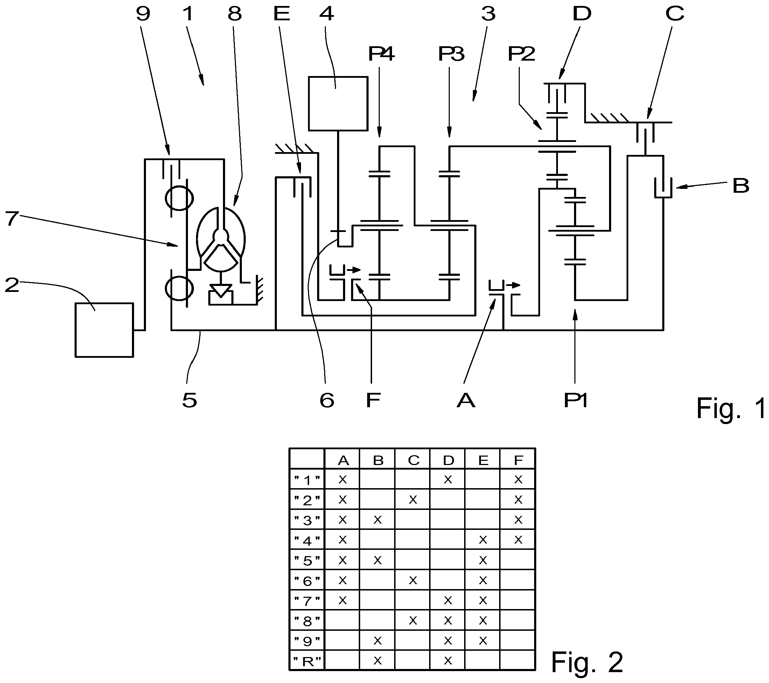

Fig. 1 zeigt eine schematisierte Darstellung eines Fahrzeugantriebsstranges 1 mit einer Antriebsmaschine 2, mit einem Getriebe 3 und mit einem Abtrieb 4. Die Antriebsmaschine 2 ist vorliegend als Brennkraftmaschine ausgebildet. Das Getriebe 3 ist ein Automatgetriebe, in dem mehrere Übersetzungsstufen "1" bis "9" für Vorwärtsfahrt und wenigstens eine Übersetzungsstufe "R" für Rückwärtsfahrt darstellbar sind. Der Abtrieb 4 umfasst in Abhängigkeit der jeweiligen Konfiguration des Fahrzeugantriebsstranges 1 eine, zwei oder auch mehrere antreibbare Fahrzeugachsen, die über das Getriebe 3 mit dem Drehmoment der Antriebsmaschine 2 beaufschlagbar sind. Während eines Übersetzungswechsels im Getriebe 3, d. h. während Hoch- oder Rückschaltungen im Getriebe 3, werden hydraulisch betätigbare Schaltelemente A bis F betätigt. Dabei sollen die Übersetzungswechsel im Wesentlichen zugkraftunterbrechungsfrei bei gleichzeitig hohem Fahrkomfort und mit einer gewünschten Performance durchgeführt werden. Unter dem Begriff Performance wird jeweils ein Übersetzungswechsel im Getriebe 3 verstanden, der innerhalb einer definierten Betriebszeit umgesetzt wird.

Um die jeweils angeforderte Schaltung im gewünschten Umfang durchführen zu können, werden die Schaltelemente A bis F jeweils mit in einem Getriebesteuergerät hinterlegten Schaltabläufen und einem jeweils damit korrespondierenden Schaltdruck beaufschlagt.

Das Getriebe 3 umfasst eine Getriebeeingangswelle 5 und eine Getriebeausgangswelle 6. Die Getriebeausgangswelle 6 ist mit dem Abtrieb 4 verbunden. Zwischen der Getriebeeingangswelle 5 und der Antriebsmaschine 2 ist vorliegend ein Torsionsdämpfer 7 und als Anfahrelement ein hydrodynamischer Drehmomentwandler 8 mit zugeordneter Wandlerüberbrückungskupplung 9 angeordnet.

Darüber hinaus umfasst das Getriebe 3 vier Planetenradsätze P1 bis P4. Der erste Planetenradsatz P1 und der zweite Planetenradsatz P2, die vorzugsweise als Minusplanetensätze ausgebildet sind, bilden einen schaltbaren Vorschaltradsatz. Der dritte Planetenradsatz P3 und der vierte Planetenradsatz P4 stellen einen sogenannten Hauptradsatz dar. Die Schaltelemente C, D und F des Getriebes 3 sind als Bremsen ausgeführt, während die Schaltelemente A, B und E sogenannte Schaltkupplungen darstellen.

Mit den Schaltelementen A bis F ist gemäß der in Fig. 2 näher dargestellten Schaltlogik ein selektives Schalten der Übersetzungsstufen "1" bis "R" realisierbar. Zum Herstellen eines Kraftflusses im Getriebe sind im Wesentlichen jeweils gleichzeitig drei der Schaltelemente A bis F in einen geschlossenen Betriebszustand zu führen bzw. zu halten.

Die Schaltelemente A und F sind vorliegend als formschlüssige Schaltelemente ohne zusätzliche Synchronisierung ausgebildet. Dadurch sind bei dem Getriebe 3 im Vergleich zu Getrieben, die nur mit reibschlüssigen Schaltelementen ausgebildet sind, durch geöffnete reibschlüssige Schaltelemente verursachte Schleppmomente reduziert.

Bekannterweise sind formschlüssige Schaltelemente im Allgemeinen nur innerhalb eines sehr schmalen Differenzdrehzahlbandes zwischen den miteinander formschlüssig in Wirkverbindung zu bringenden Schaltelementhälften um die Synchrondrehzahl herum aus einem geöffneten Betriebszustand in einen geschlossenen Betriebszustand überführbar. Ist die Synchronisierung eines zuzuschaltenden formschlüssigen Schaltelementes nicht mittels zusätzlicher konstruktiver Ausführungen durchführbar, wird die Synchronisierung durch eine entsprechende Betätigung der weiteren an der Schaltung beteiligten reibschlüssigen Schaltelemente und/oder eines sogenannten Motoreingriffes realisiert. Während eines solchen Motoreingriffes wird beispielsweise das von der Antriebsmaschine 2 zur Verfügung gestellte Antriebsmoment sowohl im Schub- als auch im Zugbetrieb des Fahrzeugantriebsstranges 1 in dem für die Synchronisierung erforderlichen Umfang variiert. Dies gilt auch für die Betätigung der reibschlüssigen Schaltelemente während der Durchführung von angeforderten Zug- oder Schubschaltungen.

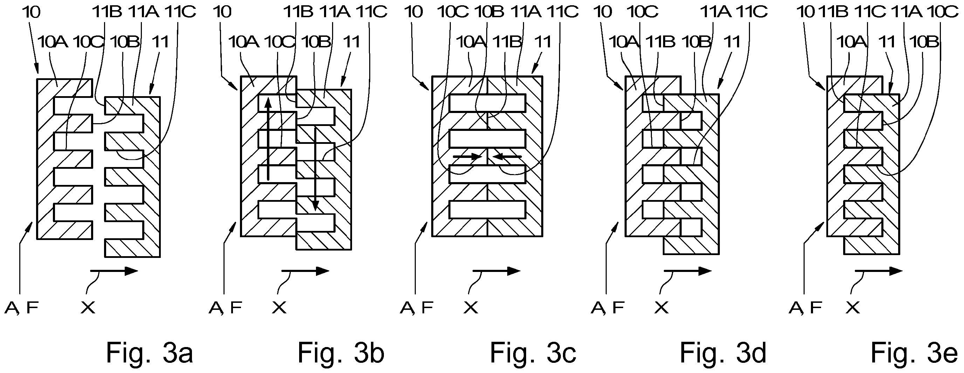

Fig. 3a bis Fig. 3e zeigen jeweils zwei Schaltelementhälften 10, 11 des formschlüssigen Schaltelementes A bzw. F in verschiedenen Betriebszuständen. Dabei ist in Fig. 3a der vollständig geöffnete Betriebszustand des formschlüssigen Schaltelementes A bzw. F dargestellt, in dem kein Formschluss zwischen den beiden Schaltelementhälften 10 und 11 vorliegt und in dem die Schaltelementhälften 10 und 11 in axialer Richtung x zueinander beabstandet sind.

Die Schaltelementhälften 10 und 11 umfassen jeweils Klauenelemente 10A und 11A. Die Klauenelemente 10A und 11A sind in Abhängigkeit des jeweils vorliegenden Anwendungsfalles durch axiales Verstellen der Schaltelementhälfte 10 und/oder der Schaltelementhälfte 11 in Bezug auf die Schaltelementhälfte 11 bzw. die Schaltelementhälfte 10 formschlüssig miteinander in Eingriff bringbar, um ein am formschlüssigen Schaltelement A bzw. F anliegendes Drehmoment in gewünschtem Umfang übertragen zu können.

Bei Vorliegen einer entsprechenden Anforderung zum Schließen des formschlüssigen Schaltelementes A oder F wird an der jeweils verschiebbar ausgeführten Schaltelementhälfte 10 oder 11 eine entsprechende Betätigungskraft in Schließrichtung angelegt. Dies führt dazu, dass der axiale Abstand zwischen den einander zugewandten Stirnseiten 10B und 11B der Klauenelemente 10A und 11A zunehmend reduziert wird.

Ist die Differenzdrehzahl zwischen den Schaltelementhälften 10 und 11 zu groß, sind die Klauenelemente 10A und 11A nicht formschlüssig miteinander in Eingriff bringbar. In einem solchen Fall tritt ein sogenanntes Ratschen auf, während dem die Klauenelemente 10A und 11A in dem in Fig. 3b gezeigten Umfang im Bereich ihrer zugewandten Stirnflächen 10B und 11B in Umfangsrichtung der Schaltelementhälften 10 und 11 aneinander abgleiten. Ein solches Ratschen ist jedoch unerwünscht, da dieses mit zunehmender Betriebsdauer irreversible Schädigungen im Bereich der Klauenelemente 10A und 11Averursacht.

Aus diesem Grund wird die Differenzdrehzahl zwischen den Schaltelementhälften 10 und 11 durch entsprechende Betätigung der jeweils am Betriebszustandswechsel im Getriebe 3 beteiligten reibschlüssigen Schaltelemente B bis E auf Werte innerhalb eines Differenzdrehzahlfensters eingestellt, das um die Synchrondrehzahl des formschlüssigen Schaltelementes A bzw. F herum angeordnet ist. Innerhalb dieses Differenzdrehzahlfensters sind die Klauenelemente 10A und 11A der Schaltelementhälften 10 und 11 in gewünschtem Umfang formschlüssig miteinander in Eingriff bringbar.

Es ist jedoch zu beachten, dass der herzustellende Formschluss durch eine sogenannte Zahn-auf-Zahnstellung zwischen den Schaltelementhälften 10 und 11 verhindert werden kann. Dabei ist die Zahn-auf-Zahnstellung wie in Fig. 3c dargestellt dadurch charakterisiert, dass die Klauenelemente 10A und 11A im Bereich ihrer Stirnflächen 10B und 11B aneinander anliegen und die Differenzdrehzahl zwischen den Schaltelementhälften 10 und 11 gleich null ist. Während einer solchen Zahn-auf-Zahnstellung des formschlüssigen Schaltelementes A oder F ist die Haftreibung zwischen den Stirnflächen 10B und 11B der Klauenelemente 10A und 11A so groß, dass das am formschlüssigen Schaltelement A oder F anliegende Drehmoment über das formschlüssige Schaltelement A bzw. F übertragen wird, ohne dass sich dabei die Zahn-auf-Zahnstellung auflöst.

Zum Auflösen der Zahn-auf-Zahnstellung ist es vorteilhaft, wenn die in Schließrichtung am formschlüssigen Schaltelement A bzw. F anliegende Betätigungskraft reduziert wird und/oder das am formschlüssigen Schaltelement A bzw. F anliegende Drehmoment erhöht wird. Dabei wird die Haftreibung im Bereich zwischen den Stirnflächen 10B und 11B der Klauenelemente 10A und 11A durch das Reduzieren der Schließkraft abgesenkt. Gleichzeitig führt das Anheben des am formschlüssigen Schaltelement A bzw. F anliegenden Drehmomentes dazu, dass die Haftreibung zwischen den Stirnflächen 10B und 11B überwunden wird und die Differenzdrehzahl zwischen den Schaltelementhälften 10 und 11 in einem für die Herstellung des Formschlusses zwischen den Klauenelementen 10A und 11A ermöglichenden Umfang ansteigt.

In Fig. 3d ist ein Betriebszustand des formschlüssigen Schaltelementes A bzw. F gezeigt, in dem zwischen den Schaltelementhälften 10 und 11 ein Formschluss mit einer sogenannten Teilüberdeckung der Klauenelemente 10A und 11A vorliegt. Ein solcher Betriebszustand liegt sowohl während eines Öffnungsvorganges als auch während eines Schließvorganges des formschlüssigen Schaltelementes A bzw. F vor.

Aus dem am Schaltelement A bzw. F angreifenden Drehmoment und den Reibkoeffizienten der Flanken 10C und 11C resultiert eine Haftreibungskraft, die zwischen den Flanken 10C, 11C wirkt. Ist die jeweils in Öffnungsrichtung oder in Schließrichtung des formschlüssigen Schaltelementes A bzw. F an den Schaltelementhälften 10 und 11 angreifende Betätigungskraft im Verhältnis zur Haftreibungskraft zwischen Flanken 10C und 11C der Klauenelemente 10A und 11A zu niedrig, tritt sogenanntes Flankenklemmen auf. Während eines solchen Flankenklemmens ist die axiale Relativstellbewegung zwischen den Schaltelementhälften 10 und 11 in Schließ- oder in Öffnungsrichtung gleich null, womit der angeforderte Betriebszustandswechsel des formschlüssigen Schaltelementes A bzw. F unterbleibt. Um ein solches Flankenklemmen zu vermeiden oder aufzulösen, kann beispielsweise die am Schaltelement A bzw. F anliegende Betätigungskraft angehoben und/oder das am formschlüssigen Schaltelement A bzw. F jeweils anliegende Drehmoment im dafür erforderlichen Umfang reduziert werden.

Der vollständig geschlossene Betriebszustand des formschlüssigen Schaltelementes A bzw. F ist in Fig. 3e dargestellt, in dem die volle Überdeckung zwischen den Klauenelementen 10A und 11A in axialer Richtung x vorliegt.

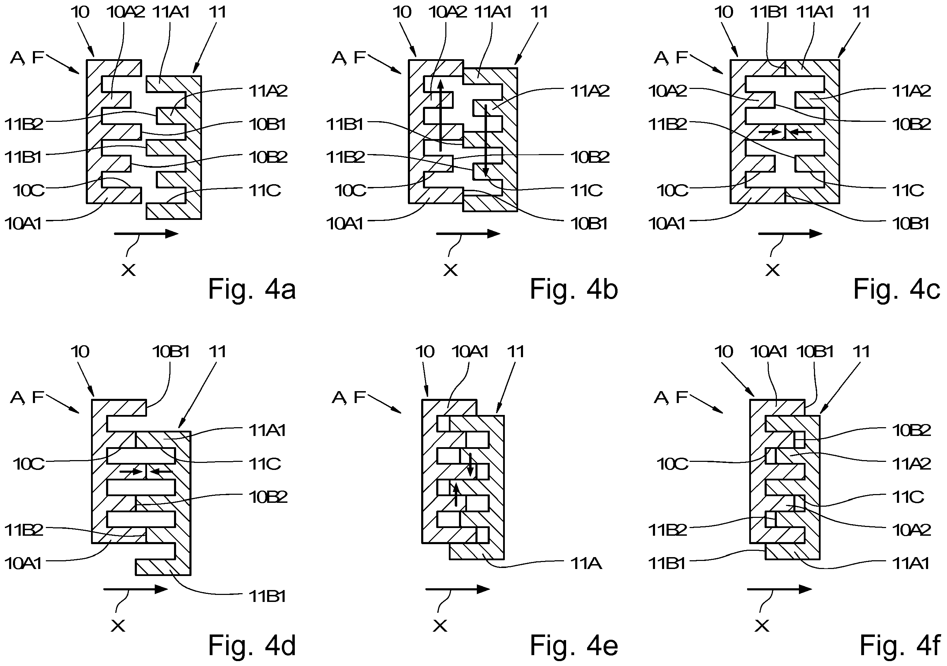

Fig. 4a bis Fig. 4f zeigen jeweils eine Fig. 3a entsprechende Darstellung des formschlüssigen Schaltelementes A bzw. F. Bei dem Schaltelement A bzw. F weisen die Klauenelemente 10A und 11Ader Schaltelementhälften 10 und 11, die in Umfangsrichtung der Schaltelementhälften 10 und 11 jeweils nebeneinander angeordnet sind, in axialer Richtung x jeweils eine unterschiedliche Länge auf. Dabei sind nachfolgend die längeren Klauenelemente unter den Bezugszeichen 10A1 bzw. 11A1 und die kürzeren Klauenelemente unter den Bezugszeichen 10A2 bzw. 11A2 näher gekennzeichnet.

Diese Ausführung der formschlüssigen Schaltelemente A und F bietet den Vorteil, dass der Formschluss zwischen den Schaltelementhälften 10 und 11 bei höheren Differenzdrehzahlen zwischen den Schaltelementhälften 10 und 11 herstellbar ist als bei der in Fig. 3a bis Fig. 3e dargestellten Ausführung der formschlüssigen Schaltelemente A und F. Im Unterschied dazu weist die Ausführung des formschlüssigen Schaltelementes A bzw. F gemäß Fig. 4a bis Fig. 4f im Vergleich zu der Ausführung des formschlüssigen Schaltelementes A bzw. F gemäß Fig. 3a bis Fig. 3e eine geringere Robustheit gegenüber Ratschen auf.

Das Schaltelement A bzw. F kann aufgrund der unterschiedlich lang ausgeführten Klauenelemente 10A1, 10A2 sowie 11A1 und 11A2 neben den zu Fig. 3a bis Fig. 3e beschriebenen Betriebszuständen des formschlüssigen Schaltelementes A bzw. F weitere Betriebszustände aufweisen, auf die in der nachfolgenden Beschreibung zu Fig. 4a bis Fig. 4f näher eingegangen wird.

Zunächst ist in Fig. 4a wiederum der vollständig geöffnete Betriebszustand des Schaltelementes A bzw. F dargestellt. Fig. 4b zeigt wiederum den Betriebszustand des formschlüssigen Schaltelementes A bzw. F während eines Ratschbetriebes. Während des Ratschbetriebes gleiten die Schaltelementhälften 10 und 11 im Bereich der Stirnflächen 10B1 und 11B1 der längeren Klauenelemente 10A1 und 11A1 in Umfangsrichtung aneinander ab. Damit ist der Formschluss zwischen den Schaltelementhälften 10 und 11 nicht herstellbar. Dieser Ratschbetrieb ist wiederum in dem zu Fig. 3b beschriebenen Umfang durch Reduzieren der Differenzdrehzahl zwischen den Schaltelementhälften 10 und 11 vermeidbar bzw. beendbar.

Des Weiteren zeigen Fig. 4c und Fig. 4d jeweils eine Zahn-auf-Zahnstellung, die das Herstellen des Formschlusses zwischen den Schaltelementhälften 10 und 11 verhindern. Dabei liegt in dem in Fig. 4c dargestellten Betriebszustand des formschlüssigen Schaltelementes A bzw. F die Zahn-auf-Zahnstellung zwischen den Stirnflächen 10B1 und 11B1 der längeren Klauenelemente 10A1 und 11A1 vor. Im Unterschied hierzu liegt die Zahn-auf-Zahnstellung zwischen den Schaltelementhälften 10 und 11 bei dem in Fig. 4d dargestellten Betriebszustand des formschlüssigen Schaltelementes A oder F zwischen den Stirnflächen 11B1 der längeren Klauenelemente 11A1 der Schaltelementhälfte 11 und den Stirnflächen 10B2 der kürzeren Klauenelemente 10A2 der Schaltelementhälfte 10 vor.

Unabhängig davon ist die jeweilige Zahn-auf-Zahnstellung zwischen den Schaltelementhälften 10 und 11 in der zu Fig. 3c beschriebenen Art und Weise auflösbar bzw. vermeidbar.

Fig. 4e zeigt einen Zwischenbetriebszustand des formschlüssigen Schaltelementes A bzw. F zwischen dem vollständig geöffneten Betriebszustand und dem vollständig geschlossenen Betriebszustand des formschlüssigen Schaltelementes A bzw. F. Während dieses Zwischenbetriebszustandes kann wiederum das vorstehend näher beschriebene Flankenklemmen zwischen den Klauenelementen 10A1, 10A2 und den Klauenelementen 11A1, 11A2 auftreten. Das Flankenklemmen ist wiederum in dem zu Fig. 3d beschriebenen Umfang vermeidbar bzw. auflösbar, um das formschlüssige Schaltelement A bzw. F im angeforderten Umfang öffnen bzw. schließen zu können.

Der vollständig geschlossene Betriebszustand des formschlüssigen Schaltelementes A bzw. F ist in Fig. 4f dargestellt.

Nachfolgend wird eine vorteilhafte Vorgehensweise beschrieben, mittels der ein Stellwegbereich zwischen den beiden Schaltelementhälften 10 und 11 des formschlüssigen Schaltelementes A bzw. F gemäß Fig. 3a ermittelbar ist, innerhalb dem die in Fig. 3c gezeigte Zahn-auf-Zahnstellung auftreten kann. Hierfür wird das formschlüssige Schaltelement A bzw. F zunächst ausgehend von dem in Fig. 3a gezeigten geöffneten Betriebszustand mit einer Betätigungskraft in Richtung des in Fig. 3e gezeigten geschlossenen Betriebszustandes beaufschlagt. Mit zunehmender Betriebszeit wird die bewegbar ausgeführte Schaltelementhälfte 10 in axialer Richtung x auf die axial nicht verschiebbar ausgeführte Schaltelementhälfte 11 zu verschoben.

Wird von dem jeweils dem formschlüssigen Schaltelement A bzw. F zugeordneten Sensor ermittelt, dass die Stellbewegung der Schaltelementhälfte 10 gleich null ist, wird ein Timer gestartet und anschließend überprüft, ob die Schaltelementhälfte 10 in der aktuellen Position über einen vordefinierten Zeitraum verharrt. Zusätzlich wird der Verlauf des Signals des Sensors beobachtet. Falls das Sensorsignal für den vordefinierten Zeitraum eine vordefinierte Untergrenze nicht unterschreitet und eine ebenfalls vordefinierte obere Grenze nicht überschreitet, wird eine bestimmte Stabilität des Sensorsignals festgestellt und die Zwischenposition des formschlüssigen Schaltelementes A bzw. F als ausreichend stabil bewertet. Dieses Bewertungsergebnis löst den Start einer Adaption aus, mittels der ein vordefinierter Standard-Stellwegbereich an das reale System angepasst wird, das das formschlüssige Schaltelement A bzw. F sowie den jeweils zugeordneten Sensor umfasst.

Zunächst wird ein Verhältnis zwischen der am formschlüssigen Schaltelement A bzw. F angreifenden und in axialer Richtung wirkenden Schließkraft sowie einer am Schaltelement A bzw. F angreifenden Radialkraft berechnet. Damit ist mit hoher Wahrscheinlichkeit ermittelbar, ob das Schaltelement aufgrund einer Zahn-auf-Zahnstellung oder aufgrund eines Flankenklemmens in der Zwischenposition verbleibt und nicht in den geschlossenen Betriebszustand überführbar ist. Dabei resultiert die Radialkraft aus dem am formschlüssigen Schaltelement A bzw. F anliegenden Drehmoment. Zusätzlich wird überprüft, ob das Schaltelement A bzw. F die Zwischenposition, aus der das Schaltelement zunächst nicht in den geschlossenen Zustand überführbar war, mit Hilfe der vorbeschriebenen Maßnahme zum Auflösen einer Zahn-auf-Zahnstellung oder durch die Vorgehensweise zum Auflösen eines Flankenklemmens verlassen hat.

Vorliegend ist das Verhältnis zwischen der axialen Betätigungskraft und der am formschlüssigen Schaltelement A bzw. F anliegenden Radialkraft innerhalb eines eine Zahn-auf-Zahnstellung begünstigenden Wertebereiches angeordnet. Des Weiteren wurde die Zwischenposition des formschlüssigen Schaltelementes A bzw. F durch die Vorgehensweise aufgelöst, mittels der eine Zahn-auf-Zahnstellung beendet wird. Aus diesem Grund wird für die Zwischenposition eine Zahn-auf-Zahnstellung ermittelt.

Dabei stellt ein eine Zahn-auf-Zahnstellung begünstigender Wertebereich des Verhältnisses zwischen der axialen und der radialen Kraft jeweils Kraftverhältnisse dar, zu denen die Haftreibungskraft im Bereich zwischen den Stirnflächen 10B und 11B der Schaltelementhälften 10 und 11 größer ist als die aus dem anliegenden Drehmoment resultierende Radialkraft. In einem solchen Betriebszustand des formschlüssigen Schaltelementes A bzw. F wird das anliegende Drehmoment durch den im Bereich der Stirnflächen 10B und 11B vorliegenden Kraftschluss zwischen den Schaltelementhälften 10 und 11 übertragen, wobei dann die Relativdrehbewegung zwischen den Schaltelementhälften 10 und 11 gleich null ist.

Des Weiteren wird vor der Festlegung des Stellwegbereiches zwischen den beiden Schaltelementhälften 10 und 11 des formschlüssigen Schaltelementes A bzw. F überprüft, ob die Adaption für die erste erkannte Zahn-auf-Zahnstellung erfolgt, ob bereits einige Zahn-auf-Zahnstellungen erkannt wurden oder bereits eine gewisse Anzahl an Zahn-auf-Zahnstellungen größer als ein Schwellwert ermittelt wurden.

Wird die Adaption auf Basis der ersten erkannten Zahn-auf-Zahnstellung durchgeführt, bilden der minimale Wert des Signals des Sensors und der maximale Wert des Signals des Sensors die Grenzen des Stellwegbereiches bzw. des Zahn-auf-Zahnbereiches. Diese Werte werden zwischengespeichert und für spätere Adaptionen als Vergleichswerte herangezogen.

Die vorbeschriebene Vorgehensweise wird jedes Mal durchgeführt, wenn über den Sensor ein Stillstand der in axialer Richtung x bewegbaren Schaltelementhälfte 10 während eines Schließvorganges des formschlüssigen Schaltelementes A bzw. F erkannt wird. Wird über die oben genannten Prüfkriterien mit hoher Wahrscheinlichkeit eine Zahn-auf-Zahnstellung erkannt, werden die zwischengespeicherten Grenzen des Stellwegbereiches dem minimalen Wert des Signals des Sensors und dem maximalen Wert des Sensors gegenübergestellt, die für die aktuell ermittelten Zahn-auf-Zahnstellung des formschlüssigen Schaltelementelementes A bzw. F ermittelt wurden.

Dabei wird der Stellwegbereich bzw. der Zahn-auf-Zahnbereich vergrößert, wenn die aktuellen Werte der Signale der Sensoren kleiner oder größer als die bisherigen Grenzen des Stellwegbereiches sind. Zunächst wird jedoch geprüft, ob der bisherige Zahn-auf-Zahnbereich und der neu ermittelte Stellwegbereich nicht zu weit auseinanderliegen. Sollte dies der Fall sein, werden der aktuell ermittelte Zahn-auf-Zahnbereich und der bereits gelernte Zahn-auf-Zahnbereich bzw. Stellwegbereich gelöscht.

Wird während eines weiteren Schließvorganges des formschlüssigen Schaltelementes A bzw. F wiederum eine Zahn-auf-Zahnstellung ermittelt, werden die dafür ermittelten minimalen und maximalen Werte des Signals des Sensors als neue Grenzen des Stellwegbereiches gespeichert.

Diese Vorgehensweise wird durchgeführt, solange die Anzahl der erkannten Zahn-auf-Zahnstellungen kleiner als ein vordefinierter Wert ist.

Ist der Stellwegbereich zwischen den beiden Schaltelementhälften 10 und 11 des formschlüssigen Schaltelementes A bzw. F bereits für eine definierte Anzahl erkannter Zahn-auf-Zahnstellungen größer als der vordefinierte Wert ermittelt und adaptiert worden, werden die jeweils für eine erkannte Zahn-auf-Zahnstellung ermittelten minimalen und maximalen Werte des Signals des Sensors mit dem Stellwegbereich verglichen. Liegt der aktuell ermittelte minimale und/oder maximale Wert des Signals des Sensors außerhalb des Stellwegbereiches, werden die Grenzen des Stellwegbereiches jeweils um einen Offset in die entsprechende Richtung vergrößert. Dies geschieht solange, bis die Untergrenze und die Obergrenze des Stellwegbereiches einen maximalen Abstand zueinander aufweisen.

Ist dies der Fall und soll die Obergrenze des Stellwegbereiches angehoben oder die Untergrenze des Stellwegbereiches verkleinert werden, dann wird die Untergrenze jeweils um denselben Schritt angehoben oder die Obergrenze jeweils um denselben Schritt reduziert. Dadurch wird die angeforderte Anpassung umgesetzt, ohne die Breite des Stellwegbereiches weiter zu vergrößern.

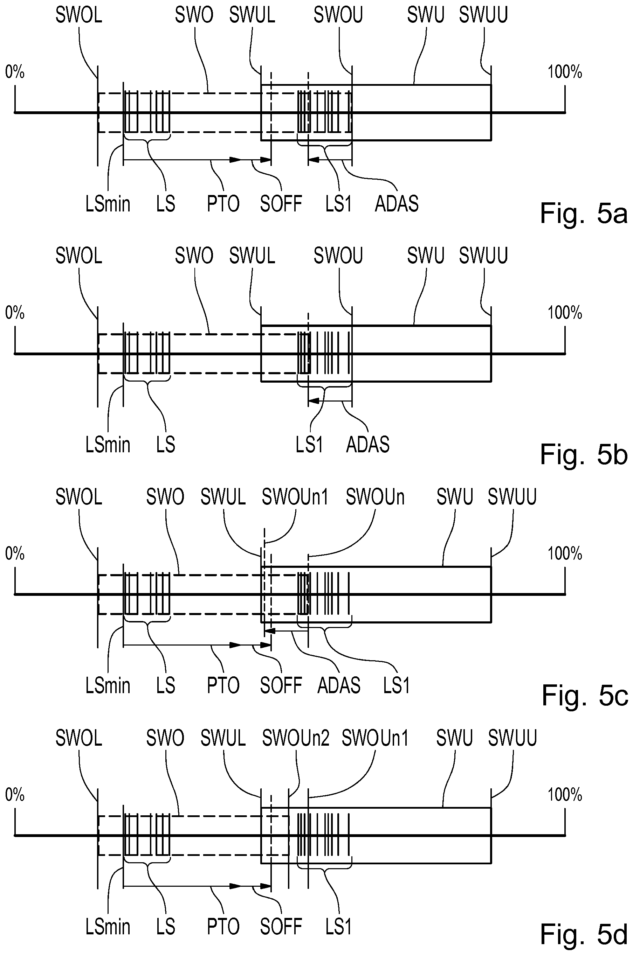

Fig. 5a bis Fig. 5d zeigen eine graphische Darstellung eines Anpassungsprozesses von zwei vordefinierten Stellwegbereichen SWO und SWU an das reale Getriebe 3. Dabei wird in Bezug auf die Darstellungen gemäß Fig. 5a bis Fig. 5d nachfolgend näher beschrieben, wie Referenzwerte LS und LS1 des Sensors des Schaltelementes A bzw. F für Zahn-auf-Zahnstellungen des formschlüssigen Schaltelementes A bzw. F gemäß Fig. 4a eindeutig dem oberen Stellwegbereich SWO oder dem unteren Stellwegbereich SWU zugeordnet werden können. Der obere Stellwegbereich SWO definiert einen Stellwegbereich der bewegbar ausgeführten Schaltelementhälfte 10 gegenüber der in axialer Richtung x nicht bewegbar ausgeführten Schaltelementhälfte 11, innerhalb dem eine in Fig. 4c dargestellte Zahn-auf-Zahnstellung zwischen den axial längeren Klauenelementen 10A1, 11A1 der Schaltelementhälften 10 ,11 wahrscheinlich ist. Gleichzeitig definiert der untere Stellwegbereich SWU der Schaltelementhälfte 10 einen Stellwegbereich, innerhalb dem mit hoher Wahrscheinlichkeit in Fig. 4d dargestellte Zahn-auf-Zahnstellungen zwischen den längeren Klauenelementen 10A1 bzw. 11A1 der Schaltelementhälfte 10 bzw. 11 und den kürzeren Klauenelementen 10A2 bzw. 11A2 der Schaltelementhälfte 10 bzw. 11 auftreten.

Ausgangspunkt stellen dabei die in Fig. 5a gezeigten Stellwegbereiche SWO und SWU dar, die vordefinierte Standard-Stellwegbereiche sind. Dabei weisen die beiden Stellwegbereiche SWO und SWU eine geringere Breite auf als der gesamte Stellwegbereich der Schaltelementhälfte 10, der sich von 0% bis 100% erstreckt. Das formschlüssige Schaltelement A bzw. F ist vollständig geöffnet, wenn der Stellweg gleich 0% ist. Ist die Schaltelementhälfte 10 vollständig verschoben und weist dessen Stellweg gleich 100% auf, ist das formschlüssige Schaltelement A bzw. F vollständig geschlossen. Der vordefinierte obere Stellwegbereich SWO weist eine untere Grenze SWOL und eine obere Grenze SWOU auf. Des Weiteren ist die Breite des vordefinierten unteren Stellwegbereiches SWU durch die untere Grenze SWUL und durch die obere Grenze SWUU definiert. Dabei sind die untere Grenze SWUL des unteren Stellwegbereiches SWU und die obere Grenze SWOU des oberen Stellwegbereiches SWO so festgelegt, dass sich der obere Stellwegbereich SWO und der untere Stellwegbereich SWU überlappen.

Die im oberen Stellwegbereich SWO eingezeichneten vertikalen Linien LS und die im Überlappungsbereich der beiden Stellwegbereiche SWO und SWU eingezeichneten weiteren vertikalen Linien LS1 entsprechen Werten des Signales des Sensors, die für erkannte Zahn-auf-Zahnstellungen des formschlüssigen Schaltelementes A bzw. F gemäß Fig. 4a ermittelt wurden.

Da die mit den Linien LS korrespondierenden Sensorwerte eindeutig dem oberen Stellwegbereich SWO zuordenbar sind, wird davon ausgegangen, dass die Zahn-auf-Zahnstellungen jeweils der in Fig. 4c dargestellten Zahn-auf-Zahnstellung zwischen den längeren Klauenelementen 10A1 und 11A1 entsprechen. Im Unterschied hierzu sind die mit den Linien LS1 korrespondierenden Sensorwerte, die ebenfalls für Zahn-auf-Zahnstellungen des formschlüssigen Schaltelementes A bzw. F ermittelt wurden, nicht eindeutig dem oberen Stellwegbereich SWO oder dem unteren Stellwegbereich SWU zuordenbar.

Aus diesem Grund wird ausgehend vom kleinsten Sensorwert LSmin ein Sicherheits-Stellwegbereich in Richtung des geschlossenen Betriebszustandes des formschlüssigen Schaltelementes A bzw. F definiert. Der Sicherheits-Stellwegbereich setzt sich vorliegend aus einem ersten Stellwegbereich PTO und einem Sicherheitsbereich SOFF zusammen. Dabei weist der erste Stellwegbereich PTO eine derartige Breite auf, dass Streuungen des Signals des Sensors während der Ermittlung der Zahn-auf-Zahnstellung zwischen den Schaltelementhälften 10 keine fehlerhafte Zuordnung bzw. Adaption bewirken. Diese Abweichungen resultieren sowohl aus Sensortoleranzen als auch aus einem sogenannten Getriebespiel. Dabei bewirkt das Getriebespiel, dass das formschlüssige Schaltelement A bzw. F im Betrieb des Getriebes 3 in Abhängigkeit der jeweils am Getriebe 3 anliegenden Last gegenüber dem zugeordneten Sensor als Ganzes in axialer Richtung verstellt wird, was eine punktgenaue Ermittlung der exakten Position für die Zahn-auf-Zahnstellung verhindert.

In einem ersten Schritt wird die obere Grenze SWOU des oberen Stellwegbereiches SWO in dem in Fig. 5a und Fig. 5b gezeigten Umfang um einen Adaptionsschritt ADAS in Richtung der unteren Grenze SWOL verschoben. Dadurch reduziert sich die Breite des Überdeckungsbereiches zwischen den beiden Stellwegbereichen SWO und SWU. Dabei ist der Adaptionsschritt ADAS ein applizierbarer Wert. Die neue obere Grenze SWOUn des oberen Stellwegbereiches SWO liegt außerhalb des Sicherheits-Stellwegbereiches.

Diese Vorgehensweise führt dazu, dass ein Teil der Sensorwerte LS1 nunmehr lediglich dem unteren Stellwegbereich SWU zugeordnet ist, während der übrige Teil der Sensorwerte LS1 nach wie vor im Überlappungsbereich zwischen dem oberen Stellwegbereich SWO und dem unteren Stellwegbereich SWU liegt.

Im Anschluss daran wird geprüft, ob eine weitere Verkürzung des oberen Stellwegbereiches SWO um den Adaptionsschritt ADAS möglich ist, ohne dass dadurch die neue obere Grenze SWOUn1 innerhalb des Sicherheits-Stellwegbereiches liegt.

Wie in Fig. 5c gezeigt, würde die erneute Verkürzung des oberen Stellwegbereiches SWO um den Adaptionsschritt ADAS dazu führen, dass die neue obere Grenze SWOUn1 innerhalb des Sicherheits-Stellwegbereiches liegt.

Da eine solche Anpassung des oberen Stellwegbereiches SWO wiederum die Möglichkeit eröffnen würde, dass für Zahn-auf-Zahnstellungen ermittelte Sensorwerte nicht eindeutig dem oberen Stellwegbereich SWO oder dem unteren Stellwegbereich SWU zuordenbar sind, wird der Abstand zwischen der neuen oberen Grenze SWOUn und dem Sicherheits-Stellwegbereich ermittelt. Anschließend wird die Breite des adaptierten Stellwegbereiches SWO lediglich um den halben Abstand in Richtung der unteren Grenze SWOL reduziert. Der in diesem Umfang verkürzte obere Stellwegbereich SWO ist in Fig. 5d gezeigt, der nunmehr von der unteren Grenze SWOL und der neuen oberen Grenze SWOUn2 begrenzt wird.

Der letztbeschriebene Adaptionsschritt des oberen Stellwegbereiches SWO bewirkt, dass nunmehr alle Sensorwerte LS1 dem unteren Stellwegbereich SWU zugeordnet sind, während die Sensorwerte LS nach wie vor dem oberen Stellwegbereich SWO zugeordnet sind.

Falls weitere Zahn-auf-Zahnstellungen ermittelt werden, die wiederum im Überlappungsbereich zwischen dem adaptierten oberen Stellwegbereich SWO gemäß Fig. 5d und dem unteren Stellwegbereich SWU liegen, wird die vorbeschriebene Vorgehensweise erneut durchgeführt. Dabei wird die Anpassung des in Fig. 5c dargestellten oberen Stellwegbereiches SWO in Richtung des in Fig. 5d dargestellten Stellwegbereiches SWO solange wiederholt, bis wiederum alle Sensorwerte LS1 dem unteren Stellwegbereich SWU und alle Sensorwerte LS dem oberen Stellwegbereich SWO zugeordnet sind.

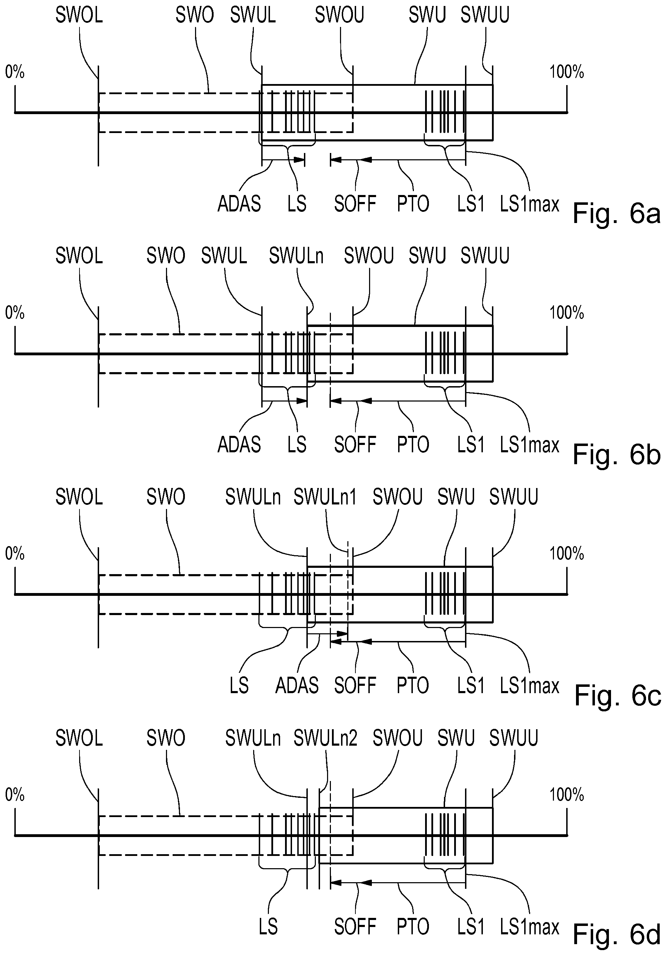

Fig. 6a zeigt wiederum eine Fig. 5a entsprechende Darstellung. Dabei stellen die beiden vordefinierten Stellwegbereiche SWO und SWU wiederum den Ausgangspunkt für die nachfolgend näher erläuterte Vorgehensweise dar. Zunächst sind die für bestimmte Zahn-auf-Zahnstellungen ermittelten Sensorwerte LS alle im Überlappungsbereich zwischen dem oberen Stellwegbereich SWO und dem unteren Stellwegbereich SWU angeordnet. Die für die Zahn-auf-Zahnstellungen ermittelten Sensorwerte LS1 liegen alle im unteren Stellwegbereich SWU.

Bei Vorliegen eines solchen Szenarios wird ausgehend vom größten Sensorwert LS1max zunächst wiederum der Sicherheits-Stellwegbereich festgelegt. Im Anschluss daran wird geprüft, ob eine mit der Verschiebung der unteren Grenze SWUL um den Adaptionswert ADAS einhergehende Verringerung der Breite des unteren Stellwegbereiches SWU dazu führt, dass die neue untere Grenze SWULn innerhalb des Sicherheits-Stellwegbereiches liegt. Da dieser Prüfschritt ein negatives Abfrageergebnis liefert, wird die Breite des unteren Stellwegbereiches SWU verkleinert. Der neue untere Stellwegbereich SWU ist in Fig. 6b dargestellt.

Da nach wie vor ein Teil der Sensorwerte LS im Überlappungsbereich zwischen dem oberen Stellwegbereich SWO und dem unteren Stellwegbereich SWU liegt, wird überprüft, ob eine weitere Reduzierung der Breite des unteren Stellwegbereiches SWU um den Adaptionswert ADAS möglich ist. Im vorliegenden Fall führt eine weitere Verkleinerung der Breite des unteren Stellwegbereiches SWU dazu, dass die weitere neue untere Grenze SWUUn1 des unteren Stellwegbereiches SWU innerhalb des Sicherheits-Stellwegbereiches liegt. Deshalb wird eine weitere Verringerung der Breite um den Adaptionswert ADAS nicht durchgeführt.

Anschließend wird der axiale Abstand zwischen der neuen unteren Grenze SWULn des unteren Stellwegbereiches SWU und dem Sicherheits-Stellwegbereich ermittelt. Wiederum im Anschluss daran wird die neue untere Grenze SWULn um den halben Abstand verschoben und die Breite des unteren Stellwegbereiches SWU um diesen Wert reduziert. Dabei wird der untere Stellwegbereich SWU nun durch die abermals angepasste untere Grenze SWULn2 und die obere Grenze SWUU begrenzt.

Im vorliegenden Fall sind nunmehr alle Sensorwerte LS dem oberen Stellwegbereich SWO und alle Sensorwerte LS1 dem unteren Stellwegbereich SWU zugeordnet. Aus diesem Grund wird eine weitere Anpassung der Stellwegbereiche SWO und SWU solange unterlassen, bis wiederum Sensorwerte, die mit Zahn-auf-Zahnstellungen korrespondieren, im Überlappungsbereich zwischen dem oberen Stellwegbereich SWO und dem angepassten unteren Stellwegbereich SWU angeordnet sind.

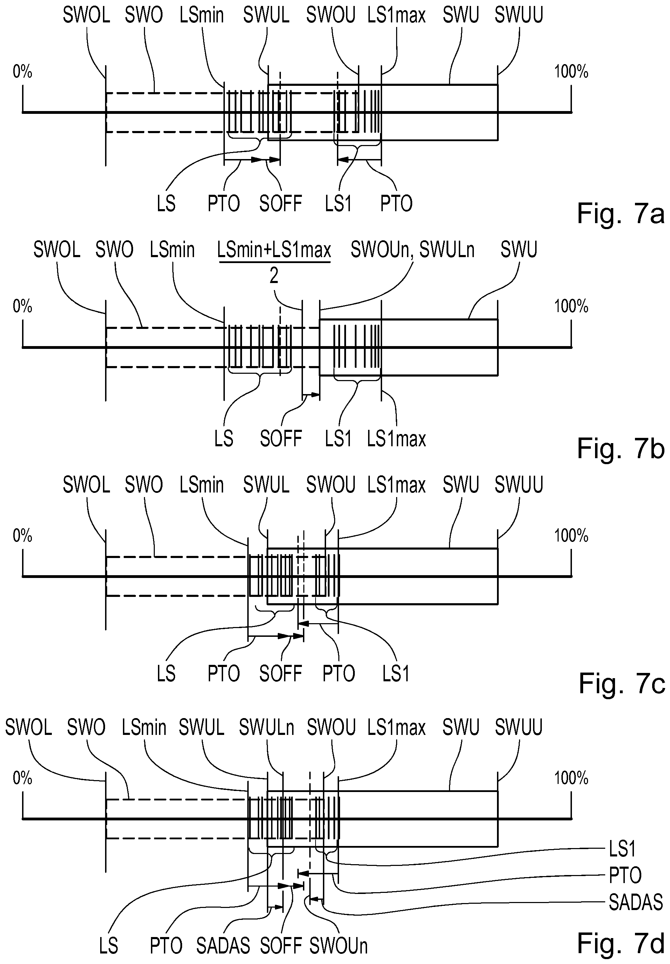

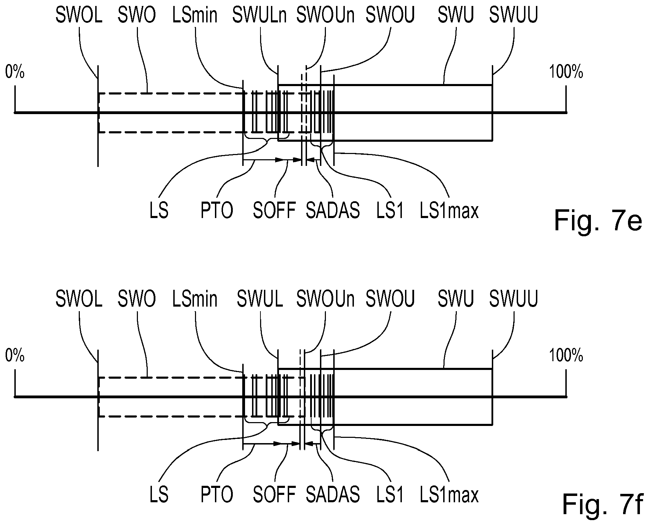

Fig. 7a zeigt wiederum eine Fig. 5a entsprechende Darstellung der vordefinierten Stellwegbereiche SWO und SWU. Dabei liegen die ermittelten Sensorwerte LS teilweise nur im oberen Stellwegbereich SWO und zum anderen Teil im Überlappungsbereich zwischen dem oberen Stellwegbereich SWO und dem unteren Stellwegbereich SWU. Gleichzeitig sind die Sensorwerte LS1 zum Teil im unteren Stellwegbereich SWU und zum anderen Teil im Überlappungsbereich zwischen den beiden Stellwegbereichen SWO und SWU angeordnet.

Um sowohl die Sensorwerte LS als auch die Sensorwerte LS1 lediglich dem oberen Stellwegbereich SWO bzw. dem unteren Stellwegbereich SWU zuordnen zu können, wird zunächst überprüft, ob der Sicherheits-Stellwegbereich ausgehend vom minimalen Sensorwert LSmin zu einem weiteren Sicherheits-Stellwegbereich beabstandet ist. Dabei erstreckt sich der weitere Sicherheits-Stellwegbereich ausgehend vom maximalen Sensorwert LS1max lediglich über die Breite des ersten Stellwegbereiches PTO in Richtung des oberen Stellwegbereiches SWO.

Im vorliegenden Fall liefert diese Abfrage ein positives Ergebnis und es wird die Mitte zwischen dem minimalen Sensorwert LSmin und dem maximalen Sensorwert LS1max bestimmt. Anschließend wird die Obergrenze SWOU des oberen Stellwegbereiches SWO in Richtung der unteren Grenze SWOL verschoben und die Breite des oberen Stellwegbereiches SWO verringert. In gleichem Umfang wird die untere Grenze SWUL des unteren Stellwegbereiches SWU in Richtung der oberen Grenze SWOU des unteren Stellwegbereiches SWU verschoben und der untere Stellwegbereich SWU bzw. dessen Breite reduziert. Dabei fallen die neue obere Grenze SWOUn des oberen Stellwegbereiches SWO und die neue untere Grenze SWULn des unteren Stellwegbereiches SWU in dem in Fig. 7b dargestellten Umfang zusammen.

Die beiden neuen Grenzen SWULn und SWOUn sind dabei in Richtung der oberen Grenze SWUO des unteren Stellwegbereiches SWU um einen Sicherheitsoffsetwert SOFF1 von der Mitte zwischen dem minimalen Sensorwert LSmin und dem maximalen Sensorwert LS1max beabstandet angeordnet. Damit sind Fehlzuordnungen von weiter bestimmten Zahn-auf-Zahnstellungen auf einfache Art und Weise vermeidbar.

Fig. 7c zeigt ein weiteres Szenario, bei dem der Abstand zwischen dem minimalen Sensorwert LSmin und dem maximalen Sensorwert LS1max wesentlich geringer ist als bei dem Szenario, dass der Darstellung gemäß Fig. 7a zugrunde liegt. Dabei ist der Abstand zwischen dem minimalen Sensorwert LSmin und dem maximalen Sensorwert LS1max derart, dass sich der Sicherheits-Stellwegbereich und der weitere Sicherheits-Stellwegbereich überlappen. Aus diesem Grund ist die zu Fig. 7a und Fig. 7b beschriebene Vorgehensweise bei dem der Darstellung gemäß Fig. 7c zugrunde liegenden Szenario nicht anwendbar, um durch eine Adaption Fehlzuordnungen von Zahn-auf-Zahnstellungen des Schaltelementes A bzw. F gemäß Fig. 4a zu vermeiden.

Aus diesem Grund wird zunächst die untere Grenze SWUL des unteren Stellwegbereiches SWU um einen kleinen Adaptionsschritt SADAS angehoben und die Breite des unteren Stellwegbereiches SWU reduziert. Der angepasste untere Stellwegbereich SWU ist in Fig. 7d gezeigt.

Im Anschluss daran wird geprüft, ob eine Verschiebung der oberen Grenze SWOU des oberen Stellwegbereiches SWO um den kleinen Adaptionsschritt SADAS in Richtung der unteren Grenze SWOL dazu führt, dass die neue obere Grenze SWOUn innerhalb des Sicherheits-Stellwegbereiches liegt. Da diese Prüfung ein negatives Abfrageergebnis liefert, wird die obere Grenze SWOU um den kleinen Adaptionsschritt SADAS verringert. Dieser Adaptionsschritt bewirkt wiederum, dass alle Sensorwerte LS1 dem unteren Stellwegbereich SWU zugeordnet sind. Der im vorbeschriebenen Umfang verkleinerte obere Stellwegbereich SWO ist in Fig. 7f dargestellt.

Im Anschluss daran wird die zu Fig. 6a bis Fig. 6d beschriebene Vorgehensweise solange durchgeführt, bis alle Sensorwerte LS lediglich dem oberen Stellwegbereich SWO zugeordnet sind.

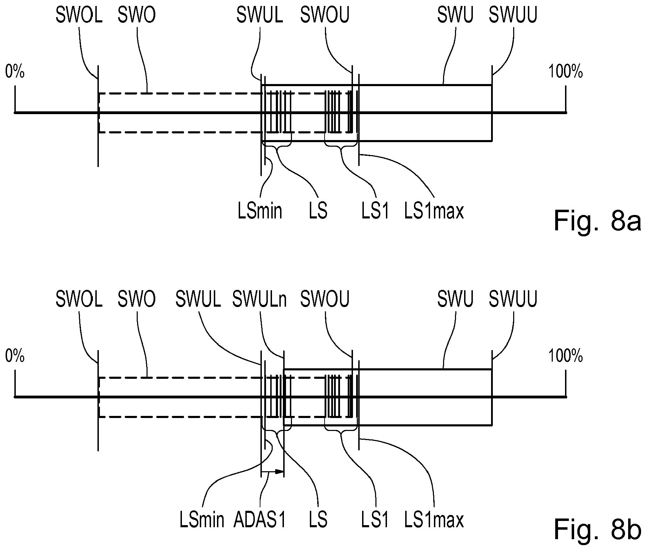

Fig. 8a zeigt wiederum eine Fig. 5a entsprechende Darstellung der vordefinierten Stellwegbereiche SWO und SWU. Bei dem Fig. 8a zugrunde liegenden Szenario sind alle ermittelte Sensorwerte LS und LS1 im Überlappungsbereich zwischen den beiden vordefinierten Stellwegbereichen SWO und SWU angeordnet. Ausgehend von diesem Szenario wird die untere Grenze SWUL des unteren Stellwegbereiches SWU in dem in Fig. 8b dargestellten Umfang um einen weiteren Adaptionsschritt ADAS1 in Richtung der oberen Grenze SWUU verschoben und somit die Breite des unteren Stellwegbereiches SWU reduziert. Diese Maßnahme bewirkt, dass nunmehr ein Teil der Sensorwerte LS nur noch im oberen Stellwegbereich SWO angeordnet ist, während der andere Teil der Sensorwerte LS genauso wie die Sensorwerte LS1 im Überlappungsbereich liegen.

Im Anschluss daran wird die Adaption in dem zu Fig. 5a bis 5d beschriebenen Umfang weiter durchgeführt, um die Sensorwerte LS und LS1 eindeutig dem oberen Stellwegbereich SWO oder dem unteren Stellwegbereich SWU zuordnen zu können.

Zusätzlich wird nachfolgend eine vorteilhafte Variante einer Einlernroutine beschrieben. Mittels der Einlernroutine sind mit den in Fig. 3a und Fig. 3e bzw. in Fig. 4a und Fig. 4f gezeigten Endlagen der Schaltelementhälften 10 und 11 korrespondierende Referenzwerte von den formschlüssigen Schaltelementen A und F zugeordneten Sensoren ermittelbar. Dabei wird die Einlernroutine zunächst ausgehend von einem vollständig geöffneten Betriebszustand des formschlüssigen Schaltelementes A bzw. F in Richtung des vollständig geschlossenen Betriebszustandes des formschlüssigen Schaltelementes A bzw. F durchgeführt. Während dieses Betriebszustandswechsels des formschlüssigen Schaltelementes A bzw. F werden jeweils die mit dem geschlossenen Betriebszustand des formschlüssigen Schaltelementes A bzw. F korrespondierenden Endlagen der Schaltelementhälften 10 und 11 bestimmt. Daran anschließend wird die Einlernroutine für den Betriebszustandswechsel des formschlüssigen Schaltelementes A bzw. F ausgehend vom vollständig geschlossenen Betriebszustand in Richtung des vollständig geöffneten Betriebszustandes durchgeführt. Während dieses Betriebszustandswechsels des formschlüssigen Schaltelementes A bzw. F werden die Endlagen der Schaltelementhälften 10 und 11 bestimmt, die mit dem vollständig geöffneten Betriebszustand des formschlüssigen Schaltelementes A bzw. F korrespondieren.

Bei der Ausführung der formschlüssigen Schaltelemente A und F, bei der lediglich eine der beiden Schaltelementhälften 10 oder 11 in axialer Richtung verstellbar gegenüber der anderen Schaltelementhälfte 11 oder 10 verschiebbar ausgeführt ist, wird lediglich die axiale Stellbewegung der bewegbaren Schaltelementhälfte 10 oder 11 mittels des jeweils zugeordneten Sensors überwacht. Sind dagegen beide Schaltelementhälften 10 und 11 in axialer Richtung zueinander bewegbar ausgeführt, werden über den jeweils zugeordneten Sensor die Stellbewegungen der Schaltelementhälften 10 und 11 überwacht. Die Endlagen der Schaltelementhälften 10 und 11 können über die Einlernroutine unabhängig davon ermittelt werden, welche Endlagen der Schaltelementhälften 10 und 11 zuerst bestimmt werden.

Während der Ermittlung der Referenzwerte des Sensors, die im vollständig geschlossenen Betriebszustand des formschlüssigen Schaltelementes A oder F mit den Endlagen der Schaltelementhälften 10 und 11 korrespondieren, wird die Differenzdrehzahl zwischen den Schaltelementhälften 10 und 11 zum Einlegezeitpunkt auf Werte innerhalb des dafür erforderlichen Differenzdrehzahlbereiches geführt. Dann weist die Differenzdrehzahl zwischen den Schaltelementhälften 10 und 11 Werte nahe der Synchrondrehzahl des formschlüssigen Schaltelementes A bzw. F auf. Diese Maßnahme gewährleistet einerseits, dass das formschlüssige Schaltelement A bzw. F sicher eingelegt werden kann, und andererseits, dass ein Ratschbetrieb und somit eine Schädigung des formschlüssigen Schaltelementes A bzw. F vermieden wird.

Bei dem vorliegend betrachteten Getriebe 3 wird die Differenzdrehzahl zwischen den Schaltelementhälften 10 und 11 der formschlüssigen Schaltelemente A und F durch entsprechende Betätigung der reibschlüssigen Schaltelemente B bis E realisiert.

Da während des angeforderten Einlegevorgangs des formschlüssigen Schaltelementes A bzw. F die Möglichkeit einer Zahn-auf-Zahnstellung und/oder eines Flankenklemmens besteht, wird das formschlüssige Schaltelement A bzw. F in der nachfolgend näher beschriebenen Art und Weise betätigt. Dabei werden sogenannte Gegenmaßnahmen gegen potentielle Zahn-auf-Zahnstellungen und gegen ein potentielles Flankenklemmen ergriffen. Dies ist erforderlich, da die Stellbewegung der Schaltelementhälfte 10 oder 11 oder beider Schaltelementhälften 10 und 11 in Schließrichtung sowohl während einer Zahn-auf-Zahnstellung als auch während eines Flankenklemmens gleich null ist. Dann besteht die Möglichkeit, dass die jeweils aktuelle Position der Schaltelementhälfte 10 und/oder 11 seitens des Sensors fehlerhaft als die Position angesehen wird, die mit dem vollständig geschlossenen Betriebszustand des formschlüssigen Schaltelementes A bzw. F korrespondiert.

Aus diesem Grund wird das am formschlüssigen Schaltelement A bzw. F während des Schließvorganges anliegende Drehmoment vor dem Einspuren der Schaltelementhälften 10 und 11, d. h. bevor eine Überdeckung zwischen den Klauenelementen 10A und 11A bzw. 10A1 und 11A1 vorliegt, angehoben und zusätzlich wird die axiale Schließkraft reduziert, um eine potentielle Zahn-auf-Zahnstellung aufzulösen bzw. zu vermeiden.

Daran anschließend wird das am formschlüssigen Schaltelement A bzw. F anliegende Drehmoment abgesenkt und die in Schließrichtung am Schaltelement A bzw. F anliegende axiale Ansteuerkraft erhöht, wenn davon ausgegangen wird, dass sich die Schaltelementhälften 10 und 11 teilweise miteinander in Überdeckung befinden. Diese Vorgehensweise bewirkt, dass ein potentielles Flankenklemmen zwischen den Schaltelementhälften 10 und 11 aufgelöst oder vermieden wird.

Die vorbeschriebenen Maßnahmen gewährleisten, dass die Schaltelementhälften 10 und 11 des formschlüssigen Schaltelementes A bzw. F die mit dem vollständig geschlossenen Betriebszustand des formschlüssigen Schaltelementes A bzw. F korrespondierenden Endlagen erreichen und die wiederum damit korrespondierenden Referenzwerte des Sensors ermittelt werden.

Zur Bestimmung der mit dem vollständig geöffneten Betriebszustand des formschlüssigen Schaltelementes A oder F korrespondierenden Endlagen der Schaltelementhälften 10 und 11 wird die Einlernroutine ausgehend von einem vollständig geschlossenen Betriebszustand des formschlüssigen Schaltelementes A bzw. F im nachfolgend näher beschriebenen Umfang durchgeführt.

Hierfür wird das vollständig geschlossene formschlüssige Schaltelement A bzw. F zunächst mit der maximal möglichen Betätigungskraft in Öffnungsrichtung betätigt bzw. angesteuert. Gleichzeitig wird das am formschlüssigen Schaltelement A bzw. F anliegende Drehmoment soweit wie möglich reduziert. Das Absenken des am formschlüssigen Schaltelement A bzw. F anliegenden Drehmomentes kann beispielsweise durch Öffnen aller Schaltelemente B bis E und A oder F erfolgen. In einem solchen Betriebszustand des Getriebes 3 ist der Kraftfluss im Getriebe 3 zwischen der Getriebeeingangswelle 5 und der Getriebeausgangswelle 6 unterbrochen und somit das am formschlüssigen Schaltelement A oder F anliegende Drehmoment minimal. Mittels dieser Vorgehensweise wird mit hoher Wahrscheinlichkeit gewährleistet, dass das formschlüssige Schaltelement A bzw. F in seinen vollständig geöffneten Betriebszustand überführt wird und der Sensor die Endlagen der Schaltelemente 10 und 11 fehlerfrei ermittelt.

Die jeweils ermittelten Referenzwerte, die mit den geöffneten und mit den geschlossenen Betriebszuständen des formschlüssigen Schaltelementes A oder F korrespondieren, werden in einem dafür vorgesehenen Speicher zwischengespeichert.

Um eine fehlerhafte Bestimmung dieser Endlagen der Schaltelementhälften 10 und 11 zu vermeiden, kann es vorgesehen sein, dass die Einlernroutine mehrfach hintereinander durchgeführt wird. Die dabei jeweils ermittelten Endlagen der Schaltelementhälften 10 und 11 der formschlüssigen Schaltelemente A und F werden einander gegenübergestellt. Weichen die jeweils ermittelten Referenzwerte der Sensoren nur geringfügig voneinander ab, wird von einer ausreichend genauen Ermittlung der Referenzwerte ausgegangen. Im Anschluss daran werden die Referenzwerte in einem nicht flüchtigen Speicher eines Steuergerätes, vorzugsweise des Getriebesteuergerätes, abgelegt.

Sind die ermittelten Referenzwerte, die mit den geöffneten und den geschlossenen Betriebszuständen des formschlüssigen Schaltelementes A oder F korrespondieren, einmalig bestimmt worden, wird der Betriebsbereich des formschlüssigen Schaltelementes A bzw. F zusätzlich in Temperatur- und Druckklassen eingeteilt. Daran anschließend wird mit jedem Erreichen einer Klauenendlage, die entweder mit dem geöffneten oder mit dem geschlossenen Betriebszustand des formschlüssigen Schaltelementes A oder F korrespondiert, ein Referenzwert bzw. ein Positionswert der Endlage ermittelt. Dieser neu ermittelte Positionswert der Endlage der bewegbaren Schaltelementhälfte 10 wird mit dem zuvor ermittelten Positionswert der Endlage verglichen, der der Temperatur- und Druckklasse zugeordnet ist, für die der neue Positionswert ermittelt wurde. Ist der aktuell ermittelte Positionswert größer als der zuvor ermittelte Positionswert, wird der Positionswert der aktuellen Temperatur- und Druckklasse um einen definierten Wert erhöht. Ist der aktuell bestimmte Positionswert kleiner als der zuvor ermittelte Positionswert, wird der Positionswert der aktuell betrachteten Temperatur-und Druckklasse um einen Wert abgesenkt.

Der jeweils adaptierte Wert wird für die aktuelle Temperatur- und Druckklasse hinterlegt und als Referenzwert für weitere Adaptionsschritte verwendet.

Wenn eine gewisse vordefinierte Anzahl an Adaptionen für eine Temperatur- und Druckklasse durchgeführt wurde, wird der bedatbare Wert bzw. die vordefinierte Schrittweite verringert, um die der jeweils zuvor ermittelte Positionswert vergrößert oder verkleinert wird. Dadurch wird auf einfache Art und Weise erreicht, dass die Adaption zu Beginn gröber und schneller durchgeführt wird und mit zunehmender Betriebszeit Abweichungen zwischen zwei Adaptionsschritten in geringerem Umfang berücksichtigt werden. Damit haben fehlerhafte Sensorsignale auf ein bereits ausadaptiertes System einen wesentlich geringeren Einfluss.

Die in letztbeschriebenem Umfang ermittelten Adaptionswerte werden erst dann als Offset zu den initial eingelernten Endlagen der Schaltelementhälfte 10 addiert oder von diesen subtrahiert, wenn wiederum eine bedatbare Anzahl von Adaptionen für beide Endlagen der Schaltelementhälfte 10 durchgeführt wurden. Damit wird sichergestellt, dass die Adaptionen die physikalischen Endlagen der Schaltelementhälfte 10 so genau wie möglich abbilden, bevor sie zur Endlagenerkennung genutzt werden.

Alternativ dazu oder kumulativ hierzu besteht auch die Möglichkeit, die Adaption der Positionswerte der Endlagen der Schaltelementhälfte 10 in Abhängigkeit von definierten Fahrsituationen durchzuführen. Derartige Fahrsituationen stellen beispielsweise einen Schub- oder Lastmodus des Fahrzeugantriebsstranges1 dar. Des Weiteren ist die Adaption auch während eines Fahrzeugstillstandes oder bei eingelegter Übersetzung für Rückwärtsfahrt "R" durchführbar.

Mit zunehmender Sensorreife können die temperaturabhängigen Klassen auch durch eine Kennlinie ersetzt werden, deren Steigung und Stützpunkt über die Adaption adaptiert werden.

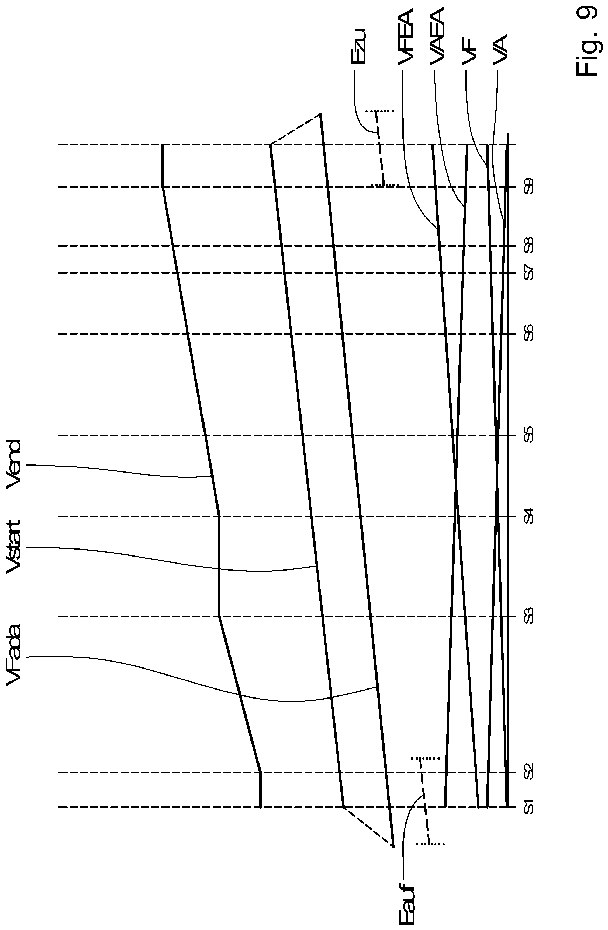

Fig. 9 zeigt mehrere Verläufe des Signals des Sensors, der dem formschlüssigen Schaltelement A bzw. F zugeordnet ist. Dabei entsprechen die Verläufe VA und VF jeweils dem Rohsignal des Sensors, der dem formschlüssigen Schaltelement A bzw. F zugeordnet ist. Über die Sensoren ist die aktuelle Position der Schaltelementhälfte 10 gegenüber der Schaltelementhälfte 11 während eines Öffnungs- oder während eines Schließvorganges über deren gesamten Stellweg ermittelbar. Dabei sind die Verläufe des Signals VA und VF jeweils idealisiert als Geraden dargestellt. Die Steigungen der Verläufe VF und VA weisen jeweils unterschiedliche Vorzeichen auf. Dies liegt daran, dass die Schaltelemente A und F jeweils mit unterschiedlicher Orientierung im Getriebe 3 verbaut sind.

Die über den Signalverläufen VF und VA dargestellten weiteren Verläufe VFEA und VAEA sind die Verläufe, die ausgehend von den Signalverläufen VF und VA nach der Durchführung der vorbeschriebenen Endlagenbestimmung vorliegen.

Aufbauend darauf erfolgt die Adaption der Endlagen über die Einteilung des Betriebsbereiches des formschlüssigen Schaltelementes A bzw. F in Druck- und Temperaturklassen, was vorstehend ebenfalls näher beschrieben ist. Aus der Endlagenadaption resultieren die beiden in Fig. 9 gezeigten Stellwegbereiche Eauf und Ezu. Dabei erstrecken sich die Bereiche Eauf und Ezu jeweils über den gesamten Stellwegbereich des formschlüssigen Schaltelementes A bzw. F. hinaus, um die druck- und temperaturbedingten Streuungen bei der Ermittlung der aktuellen Stellwegposition der Schaltelementhälfte 10 in geeignetem Umfang berücksichtigen zu können.

Über den beiden Stellwegbereichen Eauf und Ezu ist in Fig. 9 ein Verlauf VFada gezeigt, der eine Kombination aus den Verläufen VFEA und den beiden Bereichen Eauf und Ezu darstellt.

Der wiederum oberhalb des Verlaufes VFada gezeigte Verlauf Vstart entspricht einem Verlauf des Signals des Sensors, der der Zahn-auf-Zahnadaption zugrunde gelegt wird. Auf Basis des Verlaufes Vstart wird die vorbeschriebene Ermittlung des Stellweges durchgeführt, innerhalb dem jeweils eine Zahn-auf-Zahnstellung wahrscheinlich ist. Nach der Durchführung der Ermittlung des Zahn-auf-Zahnbereiches für das Schaltelement A bzw. F gemäß Fig. 3a oder der Zahn-auf-Zahnbereiche für das Schaltelement A bzw. F gemäß Fig. 4a wird der lineare Verlauf Vstart auf Basis der über die verschiedenen Adaptionen und Einlernroutinen gesammelten Informationen in unterschiedliche Stellwegbereiche unterteilt. Der diese Information aufweisende Verlauf entspricht dem Verlauf Vend, dessen Bereiche nachfolgend näher beschrieben werden.

Zwischen einem ersten Stellwegwert S1 und einem zweiten Stellwegwert S2 des Verlaufes Vend wird vorliegend ein vollständig ausgelegter Betriebszustand des formschlüssigen Schaltelementes A bzw. F angenommen. Dieser Betriebszustand entspricht somit der ersten Endlage der Schaltelementhälfte 10. Ab dem Stellwegwert S2 steigt der Verlauf Vend bis zu einem dritten Stellwegwert S3 an, der den Beginn des Zahn-auf-Zahnbereiches zwischen den Schaltelementhälften 10 und 11 definiert. Dabei sind hier Zahn-auf-Zahnstellungen zwischen den Klauenelementen 10A und 11A des Schaltelementes A bzw. F gemäß Fig. 3a möglich. Zusätzlich sind hier auch Zahn-auf-Zahnstellungen zwischen den längeren Klauenelementen 10A1 und 11A1 der Schaltelementhälften 10 und 11 des formschlüssigen Schaltelementes A bzw. F gemäß Fig. 4a möglich.

Der Zahn-auf-Zahnbereich erstreckt sich vom Stellwegwert S3 bis zum weiteren Stellwegwert S4. Ab dem Stellwegwert S4 wird mit weitere zunehmendem Stellwegwert davon ausgegangen, dass zwischen den beiden Schaltelementhälften 10 und 11 des formschlüssigen Schaltelementes A bzw. F eine Teilüberdeckung vorliegt.

Ein Stellwegwert S5 definiert eine Untergrenze des weiteren Zahn-auf-Zahnbereiches des formschlüssigen Schaltelementes A bzw. F gemäß Fig. 4a, innerhalb dem eine Zahn-auf-Zahnstellung zwischen den längeren Klauenelementen 10A1 bzw. 11A1 und den kürzeren Klauenelementen 11A2 bzw. 10A2 der Schaltelementhälften 10 und 11 möglich ist. Zusätzlich definiert ein weiterer Stellwegbereich S6 die obere Grenze dieses Zahn-auf-Zahnbereiches.

Zwischen einem Stellwegbereich S7, der bei dem vorliegend betrachteten Anwendungsfall größer als der Stellwegwert S6 ist, und einem weiteren größeren Stellwegwert S8 ist ein weiterer Stellwegbereich definiert. Innerhalb dieses Stellwegbereiches weist das formschlüssige Schaltelement A bzw. F eine solche Teilüberdeckung auf, dass ein jeweils am formschlüssigen Schaltelement A bzw. F anliegendes Drehmoment ohne die Dauerfestigkeit des formschlüssigen Schaltelementes A bzw. F zu beeinträchtigen in vollem Umfang über das Schaltelement A bzw. F übertragbar ist. Mit dieser Kenntnis ist ein sogenanntes teilüberdecktes Fahren möglich, ohne dass das Schaltelement A bzw. F mittels Eskalationsmaßnahmen, durch die ein Fahrkomfort beeinträchtigt wird, in seinen vollständig geschlossenen Betriebszustand zu überführen ist. Oberhalb eines Stellwegwertes S9 wird der vollständig geschlossene Betriebszustand des formschlüssigen Schaltelementes A bzw. F erkannt und davon ausgegangen, dass die bewegbare Schaltelementhälfte 10 in ihrer zweiten Endlage vorliegt.

### Bezugszeichen

- 1: Fahrzeugantriebsstrang
- 2: Antriebsmaschine
- 3: Getriebe
- 4: Abtrieb
- 5: Getriebeeingangswelle
- 6: Getriebeausgangswelle
- 7: Torsionsdämpfer
- 8: hydrodynamischer Drehmomentwandler
- 9: Wandlerüberbrückungskupplung
- 10,11: Schaltelementhälfte
- 10A, 10A1, 10A2: Klauenelement
- 11A, 11A1, 11A2: Klauenelement
- 10B, 10B1, 10B2: Stirnfläche des Klauenelementes
- 10C: Flanke des Klauenelementes
- 11B, 11B1, 11B2: Stirnfläche des Klauenelementes
- 11C: Flanke des Klauenelementes
- "1" bis "9": Übersetzung für Vorwärtsfahrt
- "R": Übersetzung für Rückwärtsfahrt
- A bis F: Schaltelement
- ADAS: Adaptionsschritt
- ADAS1: weiterer Adaptionsschritt
- Eauf, Ezu: Stellwegbereich
- LS, LS1: Sensorwerte
- LS1max: maximaler Sensorwert
- LSmin: minimaler Sensorwert
- P1 bis P4: Planetenradsatz
- PTO: erster Stellwegbereich
- S1 bis S9: diskreter Stellwegwert
- SADAS: kleiner Adaptionsschritt
- SOFF: Sicherheitsbereich
- SWO: oberer Stellwegbereich
- SWOL, SWOU: Grenzen des oberen Stellwegbereiches
- SWU: unterer Stellwegbereich
- SWUL, SWUU VF, VA, VFEA, VAEA, VFada,: Grenzen des unteren Stellwegbereiches
- Vstart, Vend: Verlauf des Signals des Sensors

## Patentansprüche

1. Verfahren zum Ermitteln eines Stellwegbereiches zwischen zwei Schaltelementhälften (10, 11) eines formschlüssigen Schaltelementes (A, F), die durch Bewegen von wenigstens einer der Schaltelementhälften (10) in Bezug auf die andere Schaltelementhälfte (11) miteinander formschlüssig in Eingriff oder außer Eingriff bringbar sind, während eines Schließens des formschlüssigen Schaltelementes (A, F) und bei Vorliegen einer Zahn-auf-Zahnstellung zwischen den beiden Schaltelementhälften (10, 11),
wobei eine Stellbewegung der wenigstens einen bewegbaren Schaltelementhälfte (10) in Bezug auf die andere Schaltelementhälfte (11) mittels eines Sensors überwacht wird,
und wobei eine Zahn-auf-Zahnstellung erkannt wird,
wenn über den Sensor innerhalb eines Stellwegbereiches der wenigstens einen bewegbaren Schaltelementhälfte (10) zwischen einem geöffneten Zustand und einem geschlossenen Zustand des Schaltelementes (A, F) ermittelt wird,
dass die Stellbewegung der wenigstens einen bewegbaren Schaltelementhälfte (10) in Schließrichtung null ist,
**dadurch gekennzeichnet, dass**
die Zahn-auf-Zahnstellung erkannt wird, wenn zudem ein Verhältnis zwischen einer am Schaltelement (A, F) anliegenden Schließkraft und einer an den Schaltelementhälften (10, 11) angreifenden Radialkraft,
die aus einem am Schaltelement (A, F) anliegenden Drehmoment resultiert, innerhalb eines eine Zahn-auf-Zahnstellung begünstigenden Wertebereiches liegt und über den Sensor nach einem Reduzieren der Schließkraft und/oder nach einem Erhöhen des anliegenden Drehmomentes eine Stellbewegung der wenigstens einen bewegbaren Schaltelementhälfte (10) in Schließrichtung erkannt wird,
wobei die Ermittlung des Stellwegbereiches zwischen den Schaltelementhälften (10, 11) gestartet wird, wenn
über den Sensor eine Stellbewegung der wenigstens einen bewegbaren Schaltelementhälfte (10) in Schließrichtung gleich null bestimmt wird und
ein Verlauf des Signals des Sensors innerhalb eines Zeitraumes,
der gleich einem vordefinierten Zeitraum oder länger als der vordefinierte Zeitraum ist,
größer als oder gleich einem vordefinierten unteren Schwellwert und kleiner als oder gleich einem vordefinierten oberen Schwellwert ist.

2. Verfahren nach Anspruch 1, **dadurch gekennzeichnet, dass**
bei einer erstmaligen Ermittlung einer Zahn-auf-Zahnstellung und der Ermittlung des damit korrespondierenden Stellwegbereiches zwischen den Schaltelementhälften (10, 11) der minimale Wert des Verlaufes des Signals des Sensors und der maximale Wert des Verlaufes des Signals des Sensors Grenzen des Stellwegbereiches zwischen den Schaltelementhälften (10, 11) bilden, innerhalb dem eine Zahn-auf-Zahnstellung erwartet wird.

3. Verfahren nach Anspruch 2, **dadurch gekennzeichnet, dass** die Grenzen des Stellwegbereiches in Abhängigkeit weiterer minimaler und maximaler Werte des Verlaufes des Signals des Sensors, die jeweils während weiterer Ermittlungen des Stellwegbereiches zwischen den Schaltelementhälften (10, 11) für eine erkannte Zahn-auf-Zahnstellung bestimmt werden, verändert werden, wenn die weiteren minimalen und maximalen Werte des Verlaufes des Signals des Sensors von den zuvor ermittelten minimalen und maximalen Werten des Verlaufes des Signals des Sensors jeweils größer als ein Betrag eines Schwellwerts abweichen.

4. Verfahren nach Anspruch 2 oder 3, **dadurch gekennzeichnet, dass** die Grenzen des Wertebereiches in Abhängigkeit des jeweils aktuell ermittelten minimalen Wertes und des maximalen Wertes des Verlaufes des Signals des Sensors variiert werden, wenn ein Abstand zwischen dem durch den aktuell ermittelten minimalen Wert und den aktuell ermittelten maximalen Wert des Verlaufes des Signals des Sensors definierten Wertebereich und dem Wertebereich, der zuvor bestimmt wurde, kleiner oder gleich als ein vordefinierter Schwellwert ist.

5. Verfahren nach einem der Ansprüche 2 bis 4, **dadurch gekennzeichnet, dass** die Grenzen des zuvor ermittelten Stellwegbereiches verworfen werden und der Stellwegbereich bei einer späteren Ermittlung einer Zahn-auf-Zahnstellung erneut bestimmt wird, wenn der Abstand zwischen dem durch den aktuell ermittelten minimalen Wert und den aktuell ermittelten maximalen Wert des Verlaufes Signals des Sensors definierten Stellwegbereich und dem zuvor ermittelten Stellwegbereich größer als der vordefinierte Schwellwert ist und der zuvor ermittelte Stellwegbereich in Abhängigkeit einer Anzahl erkannter Zahn-auf-Zahnstellungen festgelegt wurde, die kleiner als ein Schwellwert ist.

6. Verfahren nach einem der Ansprüche 2 bis 4, **dadurch gekennzeichnet, dass** der Stellwegbereich durch Variieren der Grenzen in Abhängigkeit der ermittelten minimalen und maximalen Werte des Verlaufes des Signals des Sensors solange vergrößert wird, bis ein Abstand zwischen den Grenzen des Stellwegbereiches größer oder gleich als ein vordefinierter maximaler Wert ist.

7. Verfahren nach einem der Ansprüche 2 bis 6, **dadurch gekennzeichnet, dass** der jeweils für eine Zahn-auf-Zahnstellung ermittelte minimale Wert des Verlaufes des Signals des Sensors und der ebenfalls ermittelte maximale Wert des Verlaufes des Signals des Sensors jeweils den Grenzen eines Stellwegbereiches gegenübergestellt werden, der bereits in Abhängigkeit einer Anzahl von ermittelten Zahn-auf-Zahnstellungen größer als ein Schwellwert bestimmt wurde, wobei die Grenzen des Stellwegbereiches um einen Offset vergrößert oder verkleinert werden, wenn der ermittelte minimale Wert und der ermittelte maximale Wert des Verlaufes des Signals des Sensors jeweils von der unteren Grenze oder von der oberen Grenze des Stellwegbereiches um Werte größer als ein Betrag eines Schwellwertes abweichen.

8. Verfahren nach Anspruch 7, **dadurch gekennzeichnet, dass** die Grenzen des Stellwegbereiches jeweils in Abhängigkeit des für eine Zahn-auf-Zahnstellung ermittelten minimalen Wertes des Verlaufes des Signals des Sensors oder des ebenfalls ermittelten maximalen Wertes des Verlaufes des Signals des Sensors variiert werden, wenn der Abstand der Grenzen des Stellwegbereiches bereits den maximalen Wert erreicht oder überschritten hat und der minimale Wert oder der maximale Wert des Verlaufes des Signals des Sensors außerhalb des Stellwegbereiches liegt, wobei die Grenzen des Stellwegbereiches dann jeweils so aufeinander abgestimmt angepasst werden, dass der Abstand zwischen den Grenzen des angepassten Stellwegbereiches den maximalen Abstand im Wesentlichen nicht übersteigt.

9. Verfahren nach einem der Ansprüche 1 bis 8, **dadurch gekennzeichnet, dass** ausgehend von zwei vordefinierten Stellwegbereichen (SWO, SWU) zwischen den Schaltelementhälften (10, 11), die sich überlappen, zwei Stellwegbereiche ermittelt werden, wenn jede der Schaltelementhälften (10, 11) mit zwei Gruppen von Klauenelementen (10A1, 10A2, 11A1, 11A2) ausgebildet ist, wobei die Klauenelemente (10A1, 11A1) der ersten Gruppe in Stellrichtung der wenigstens einen bewegbaren Schaltelementhälfte (10) eine größere Länge aufweist als die Klauenelemente (10A2, 11A2) der zweiten Gruppe und die Klauenelemente (10A1, 10A2, 11A1, 11A2) der beiden Gruppen in Umfangsrichtung der Schaltelementhälften (10, 11) abwechselnd nebeneinander angeordnet sind.

10. Verfahren nach Anspruch 9, **dadurch gekennzeichnet, dass** die Grenzen (SWOU, SWUL) der Stellwegbereiche (SWO, SWU) solange angepasst werden, bis alle Werte des Signals des Sensors, die für Zahn-auf-Zahnstellungen ermittelt werden und innerhalb des Überlappungsbereiches der beiden Stellwegbereiche (SWO, SWU) liegen, lediglich einem der beiden Stellwegbereiche (SWO oder SWU) zugeordnet sind.

11. Verfahren nach Anspruch 9 oder 10, **dadurch gekennzeichnet, dass** der Stellwegbereich (SWO), der einen Wertebereich für Signale des Sensors darstellt, die für Zahn-auf-Zahnstellungen zwischen den Klauenelementen (10A1, 11A1) der ersten Gruppen der Schaltelementhälften (10, 11) ermittelt werden, eine derartige Mindestbreite aufweist, dass aus Bewegungen des Schaltelementes (A, F) gegenüber dem Sensor und aus einem toleranzbedingten Sensorverhalten resultierende Abstände zwischen den jeweils für eine Zahn-auf-Zahnstellung ermittelten minimalen Werten und maximalen Werten des Verlaufes des Signals des Sensors vom Stellwegbereich (SWO) umfasst werden.

12. Steuergerät zum Ermitteln einer Zahn-auf-Zahnstellung zwischen zwei Schaltelementhälften (10, 11) eines formschlüssigen Schaltelementes (A, F), die durch Bewegen von wenigstens einer der Schaltelementhälften (10) in Bezug auf die andere Schaltelementhälfte (11) miteinander formschlüssig in Eingriff oder außer Eingriff bringbar sind, während eines Schließens des formschlüssigen Schaltelementes (A, F),
wobei eine Stellbewegung der wenigstens einen bewegbaren Schaltelementhälfte (10) in Bezug auf die andere Schaltelementhälfte (10) in Schließrichtung während des Schließvorganges mittels eines Sensors überwacht wird, mit dem das Steuergerät über eine Empfangsschnittstelle verbindbar ist,
wobei das Steuergerät derart ausgeführt ist, dass eine Zahn-auf-Zahnstellung erkannt wird,
wenn über den Sensor innerhalb eines Stellwegbereiches der wenigstens einen bewegbaren Schaltelementhälfte (10) zwischen einem geöffneten Zustand und einem geschlossenen Zustand des Schaltelementes (A, F) ermittelt wird,
dass die Stellbewegung der wenigstens einen bewegbaren Schaltelementhälfte (10) in Schließrichtung null ist,
**dadurch gekennzeichnet, dass**
die Zahn-auf-Zahnstellung erkannt wird, wenn zudem ein Verhältnis zwischen einer am Schaltelement (A, F) anliegenden Schließkraft und einer an den Schaltelementhälften (10, 11) angreifenden Radialkraft,
die aus einem am Schaltelement (A, F) anliegenden Drehmoment resultiert, innerhalb eines eine Zahn-auf-Zahnstellung begünstigenden Wertebereiches liegt und über den Sensor nach einem Reduzieren der Schließkraft und/oder nach einem Erhöhen des anliegenden Drehmomentes eine Stellbewegung der wenigstens einen bewegbaren Schaltelementhälfte (10) in Schließrichtung erkannt wird,
wobei die Ermittlung des Stellwegbereiches zwischen den Schaltelementhälften (10, 11) durch das Steuergerät gestartet wird, wenn
über den Sensor eine Stellbewegung der wenigstens einen bewegbaren Schaltelementhälfte (10) in Schließrichtung gleich null bestimmt wird und
ein Verlauf des Signals des Sensors innerhalb eines Zeitraumes,
der gleich einem vordefinierten Zeitraum oder länger als der vordefinierte Zeitraum ist,
größer als oder gleich einem vordefinierten unteren Schwellwert und kleiner als oder gleich einem vordefinierten oberen Schwellwert ist.

13. Computerprogrammprodukt, umfassend Befehle, die bei der Ausführung des Programms durch einen Computer diesen veranlassen alle Schritte des Verfahrens nach einem der Ansprüche 1 bis 11 auszuführen.

## Claims

1. Method for determining an actuating travel range between two shift element halves (10, 11) of a positively locking shift element (A, F), which can be brought into engagement or out of engagement with one another in a positively locking manner by moving at least one of the shift element halves (10) with respect to the other shift element half (11), during closing of the positively locking shift element (A, F) and if there is a tooth-on-tooth position between the two shift element halves (10, 11) ,
wherein an actuating movement of the at least one movable shift element half (10) with respect to the other shift element half (11) is monitored using a sensor,
and wherein a tooth-on-tooth position is detected if it is determined by means of the sensor, within an actuating travel range of the at least one movable shift element half (10) between an open state and a closed state of the shift element (A, F),
that the actuating movement of the at least one movable shift element half (10) in the closing direction is zero,
**characterized in that**
the tooth-on-tooth position is detected if a ratio between a closing force applied to the switching element (A, F) and a radial force acting on the shift element halves (10, 11),
which results from a torque applied to the switching element (A, F),
is within a range of values favouring a tooth-on-tooth position and, after reducing the closing force and/or after increasing the applied torque, an actuating movement of the at least one movable switching element half (10) in the closing direction is detected using the sensor,
wherein the determination of the actuating travel range between the shift element halves (10, 11) is started if an actuating movement of the at least one movable shift element half (10) in the closing direction is determined to be equal to zero using the sensor and
a profile of the signal from the sensor within a period,
which is equal to a predefined period or longer than the predefined period,
is greater than or equal to a predefined lower threshold value and less than or equal to a predefined upper threshold value.

2. Method according to Claim 1, **characterized in that**, when a tooth-on-tooth position is determined for the first time and the corresponding actuating travel range between the shift element halves (10, 11) is determined, the minimum value of the profile of the signal from the sensor and the maximum value of the profile of the signal from the sensor form limits of the actuating travel range between the shift element halves (10, 11), within which a tooth-on-tooth position is expected.

3. Method according to Claim 2, **characterized in that** the limits of the actuating travel range are changed, on the basis of further minimum and maximum values of the profile of the signal from the sensor which are each determined during further determinations of the actuating travel range between the shift element halves (10, 11) for a detected tooth-on-tooth position, if the further minimum and maximum values of the profile of the signal from the sensor differ from the previously determined minimum and maximum values of the profile of the signal from the sensor in each case by more than an absolute value of a threshold value.

4. Method according to Claim 2 or 3, **characterized in that** the limits of the range of values are varied, on the basis of the respective currently determined minimum value and the maximum value of the profile of the signal from the sensor, if a distance between the range of values defined by the currently determined minimum value and the currently determined maximum value of the profile of the signal from the sensor and the previously determined range of values is less than or equal to a predefined threshold value.

5. Method according to one of Claims 2 to 4, **characterized in that** the limits of the previously determined actuating travel range are rejected and the actuating travel range is determined again in the event of a tooth-on-tooth position being subsequently determined if the distance between the actuating travel range defined by the currently determined minimum value and the currently determined maximum value of the profile of the signal from the sensor and the previously determined actuating travel range is greater than the predefined threshold value and the previously determined actuating travel range was determined on the basis of a number of detected tooth-on-tooth positions which is less than a threshold value.

6. Method according to one of Claims 2 to 4, **characterized in that** the actuating travel range is increased by varying the limits on the basis of the determined minimum and maximum values of the profile of the signal from the sensor until a distance between the limits of the actuating travel range is greater than or equal to a predefined maximum value.

7. Method according to one of Claims 2 to 6, **characterized in that** the minimum value of the profile of the signal from the sensor that is respectively determined for a tooth-on-tooth position and the likewise determined maximum value of the profile of the signal from the sensor are each compared with the limits of an actuating travel range which has already been determined on the basis of a number of determined tooth-on-tooth positions of greater than a threshold value, wherein the limits of the actuating travel range are increased or reduced by an offset if the determined minimum value and the determined maximum value of the profile of the signal from the sensor respectively differ from the lower limit or the upper limit of the actuating travel range by values of greater than an absolute value of a threshold value.

8. Method according to Claim 7, **characterized in that** the limits of the actuating travel range are each varied on the basis of the minimum value of the profile of the signal from the sensor that is determined for a tooth-on-tooth position or the likewise determined maximum value of the profile of the signal from the sensor if the distance between the limits of the actuating travel range has already reached or exceeded the maximum value and the minimum value or the maximum value of the profile of the signal from the sensor is outside the actuating travel range, wherein the limits of the actuating travel range then each adapted in a manner matched to one another such that the distance between the limits of the adapted actuating travel range substantially does not exceed the maximum distance.

9. Method according to one of Claims 1 to 8, **characterized in that**, starting from two predefined actuating travel ranges (SWO, SWU) between the shift element halves (10, 11), which overlap, two actuating travel ranges are determined if each of the shift element halves (10, 11) is formed with two groups of dog elements (10A1, 10A2, 11A1, 11A2), wherein the dog elements (10A1, 11A1) in the first group have a longer length in the actuating direction of the at least one movable shift element half (10) than the dog elements (10A2, 11A2) in the second group, and the dog elements (10A1, 10A2, 11A1, 11A2) in the two groups are arranged alternately beside one another in the circumferential direction of the shift element halves (10, 11).

10. Method according to Claim 9, **characterized in that** the limits (SWOU, SWUL) of the actuating travel ranges (SWO, SWU) are adapted until all values of the signal from the sensor, which are determined for tooth-on-tooth positions and are within the overlapping region of the two actuating travel ranges (SWO, SWU), are assigned only to one of the two actuating travel ranges (SWO or SWU).

11. Method according to Claim 9 or 10, **characterized in that** the actuating travel range (SWO), which constitutes a range of values for signals from the sensor which are determined for tooth-on-tooth positions between the dog elements (10A1, 11A1) in the first groups of shift element halves (10, 11), has such a minimum width that distances between the minimum values and maximum values of the profile of the signal from the sensor which are respectively determined for a tooth-on-tooth position, which distances result from movements of the shift element (A, F) with respect to the sensor and from a tolerance-related sensor behaviour, are included in the actuating travel range (SWO).

12. Control device for determining a tooth-on-tooth position between two shift element halves (10, 11) of a positively locking shift element (A, F), which can be brought into engagement or out of engagement with one another in a positively locking manner by moving at least one of the shift element halves (10) with respect to the other shift element half (11), during closing of the positively locking shift element (A, F),
wherein an actuating movement of the at least one movable shift element half (10) with respect to the other shift element half (11) in the closing direction is monitored during the closing operation by means of a sensor, to which the control device can be connected via a receiving interface,
wherein the control device is designed such that a tooth-on-tooth position is detected
if it is determined using the sensor, within an actuating travel range of the at least one movable shift element half (10) between an open state and a closed state of the shift element (A, F),
that the actuating movement of the at least one movable shift element half (10) in the closing direction is zero,
**characterized in that**
the tooth-on-tooth position is detected if a ratio between a closing force applied to the shift element (A, F) and radial force acting on the shift element halves (10, 11),
which results from a torque applied to the shift element (A, F),
is also within a range of values favouring a tooth-on-tooth position and, after reducing the closing force and/or after increasing the applied torque, an actuating movement of the at least one movable shift element half (10) in the closing direction is detected using sensor, wherein the determination of the actuating travel range between the shift element halves (10, 11) is started by the control device if
an actuating movement of the at least one movable shift element half (10) in the closing direction is determined to be equal to zero using the sensor and
a profile of the signal from the sensor within a period,
which is equal to a predefined period or longer than the predefined period,
is greater than or equal to a predefined lower threshold value and less than or equal to a predefined upper threshold value.

13. Computer program product comprising instructions which, when the program is executed by a computer, cause the latter to carry out all of the steps of the method according to one of Claims 1 to 11.

## Revendications

1. Procédé de détermination d'une plage de course de réglage entre deux moitiés d'élément de commutation (10, 11) d'un élément de commutation (A, F) à complémentarité de formes, lesquelles peuvent être amenées en prise par complémentarité de formes l'une avec l'autre ou hors prise par déplacement d'au moins l'une des moitiés d'élément de commutation (10) en référence à l'autre moitié d'élément de commutation (11), pendant une fermeture de l'élément de commutation (A, F) à complémentarité de formes et en présence d'une position dent sur dent entre les deux moitiés d'élément de commutation (10, 11),
un mouvement de réglage de l'au moins une moitié d'élément de commutation (10) mobile en référence à l'autre moitié d'élément de commutation (11) étant surveillé au moyen d'un capteur,
et une position dent sur dent étant reconnue,
lorsque, par le biais du capteur, à l'intérieur d'une plage de course de réglage de l'au moins une moitié d'élément de commutation (10) mobile entre un état ouvert et un état fermé de l'élément de commutation (A, F), il est déterminé
que le mouvement de réglage de l'au moins une moitié d'élément de commutation (10) mobile en direction de la fermeture est nul,
**caractérisé en ce que**
la position dent sur dent est reconnue lorsqu'en plus de cela, un rapport entre une force de fermeture appliquée à l'élément de commutation (A, F) et une force radiale s'exerçant au niveau des moitiés d'élément de commutation (10, 11),
laquelle résulte d'un couple appliqué à l'élément de commutation (A, F), se trouve à l'intérieur d'une plage de valeurs qui favorise la position dent sur dent et un mouvement de réglage de l'au moins une moitié d'élément de commutation (10) mobile en direction de la fermeture est reconnu par le biais du capteur après une réduction de la force de fermeture et/ou après une augmentation du couple appliqué,
la détermination de la plage de course de réglage entre les moitiés d'élément de commutation (10, 11) étant démarrée lorsque
un mouvement de réglage de l'au moins une moitié d'élément de commutation (10) mobile en direction de la fermeture égal à zéro est identifié par le biais du capteur et
une évolution du signal du capteur au sein d'une période, laquelle est égale à une période prédéfinie ou plus longue que la période prédéfinie,
est égale ou supérieure à une valeur de seuil basse prédéfinie et inférieure ou égale à une valeur de seuil haute prédéfinie.

2. Procédé selon la revendication 1, **caractérisé en ce que** lors d'une première détermination d'une position dent sur dent et de la détermination de la plage de course de réglage qui lui correspond entre les moitiés d'élément de commutation (10, 11), la valeur minimale de l'évolution du signal du capteur et la valeur maximale de l'évolution du signal du capteur forment les limites de la plage de course de réglage entre les moitiés d'élément de commutation (10, 11) à l'intérieur de laquelle une position dent sur dent est attendue.

3. Procédé selon la revendication 2, **caractérisé en ce que** les limites de la plage de course de réglage sont modifiées en fonction de valeurs minimales et maximales supplémentaires de l'évolution du signal du capteur, lesquelles sont respectivement identifiées pendant des déterminations supplémentaires de la plage de course de réglage entre les moitiés d'élément de commutation (10, 11), lorsque les valeurs minimales et maximales supplémentaires de l'évolution du signal du capteur s'écartent des valeurs minimales et maximales de l'évolution du signal du capteur déterminées précédemment respectivement d'un montant supérieur à une valeur de seuil.

4. Procédé selon la revendication 2, **caractérisé en ce que** les limites de la plage de valeurs sont variées en fonction de la valeur minimale et de la valeur maximale de l'évolution du signal du capteur respectivement déterminées actuellement lorsqu'un écart entre la plage de valeurs, définie par la valeur minimale actuellement déterminée et la valeur maximale actuellement déterminée de l'évolution du signal du capteur, et la plage de valeurs qui a été identifiée précédemment, est inférieur ou égal à une valeur de seuil prédéfinie.

5. Procédé selon l'une des revendications 2 à 4, **caractérisé en ce que** les limites de la plage de course de réglage déterminée précédemment sont rejetées et la plage de course de réglage est de nouveau identifiée lors d'une détermination ultérieure d'une position dent sur dent lorsque l'écart entre la plage de course de réglage, définie par la valeur minimale actuellement déterminée et la valeur maximale actuellement déterminée de l'évolution du signal du capteur, et la plage de course de réglage qui a été déterminée précédemment, est supérieur à la valeur de seuil prédéfinie et la plage de course de réglage déterminée précédemment a été spécifiée en fonction d'un nombre de positions dent sur dent reconnues qui est inférieur à une valeur de seuil.

6. Procédé selon l'une des revendications 2 à 4, **caractérisé en ce que** la plage de course de réglage est agrandie en faisant varier les limites en fonction des valeurs minimale et maximale déterminées de l'évolution du signal du capteur jusqu'à ce qu'un écart entre les limites de la plage de course de réglage soit égal ou supérieur à une valeur maximale prédéfinie.

7. Procédé selon l'une des revendications 2 à 6, **caractérisé en ce que** la valeur minimale de l'évolution du signal du capteur, déterminée respectivement pour une position dent sur dent, et la valeur maximale également déterminée de l'évolution du signal du capteur sont respectivement comparées aux limites d'une plage de course de réglage, qui a déjà été identifiée comme supérieure à une valeur de seuil en fonction d'un nombre de positions dent sur dent déterminées, les limites de la plage de course de réglage étant agrandies ou réduites d'un décalage lorsque la valeur minimale déterminée et la valeur maximale déterminée de l'évolution du signal du capteur s'écartent respectivement de la limite basse ou de la limite haute de la plage de course de réglage par des valeurs supérieures à un montant d'une valeur de seuil.

8. Procédé selon la revendication 7, **caractérisé en ce que** les limites de la plage de course de réglage sont variées respectivement en fonction de la valeur minimale de l'évolution du signal du capteur, déterminée pour une position dent sur dent, ou de la valeur maximale également déterminée de l'évolution du signal du capteur lorsque l'écart entre les limites de la plage de course de réglage a déjà atteint ou dépassé la valeur maximale et la valeur minimale ou la valeur maximale de l'évolution du signal du capteur se trouve à l'extérieur de la plage de course de réglage, les limites de la plage de course de réglage étant alors respectivement adaptées de manière coordonnée entre elles que l'écart entre les limites de la plage de course de réglage adaptées ne dépasse pas, pour l'essentiel, l'écart maximal.

9. Procédé selon l'une des revendications 1 à 8, **caractérisé en ce que** deux plages de course de réglage sont déterminées à partir de deux plages de course de réglage prédéfinies (SWO, SWU) entre les moitiés d'élément de commutation (10, 11) qui se chevauchent, lorsque chacune des moitiés d'élément de commutation (10, 11) est formée avec deux groupes d'éléments formant griffes (10A1, 10A2, 11A1, 11A2), les éléments formant griffes (10A1, 11A1) du premier groupe, dans la direction de réglage de l'au moins une moitié d'élément de commutation (10) mobile, présentant une longueur plus grande que les éléments formant griffes (10A2, 11A2) du deuxième groupe et les éléments formant griffes (10A1, 10A2, 11A1, 11A2) des deux groupes étant disposés les uns à côté des autres en alternance dans la direction périphérique des moitiés d'élément de commutation (10, 11) .

10. Procédé selon la revendication 9, **caractérisé en ce que** les limites (SWOU, SWUL) des plages de course de réglage (SWO, SWU) sont adaptées jusqu'à ce que toutes les valeurs du signal du capteur, qui ont été déterminées pour les positions dent sur dent et se trouvent à l'intérieur de la zone de chevauchement des deux plages de course de réglage (SWO, SWU), sont uniquement associées à l'une des deux plages de course de réglage (SWO, SWU).

11. Procédé selon la revendication 9 ou 10, **caractérisé en ce que** la plage de course de réglage (SWO), qui représente une plage de valeurs pour les signaux du capteur qui ont été déterminées pour les positions dent sur dent entre les éléments formant griffes (10A1, 11A1) du premier groupe des moitiés d'élément de commutation (10, 11), présente une largeur minimale telle que les écarts entre les valeurs minimales et les valeurs maximales déterminées de l'évolution du signal du capteur, résultant des mouvements de l'élément de commutation (A, F) par rapport au capteur et d'un comportement du capteur lié aux tolérances, sont compris par la plage de course de réglage (SWO).

12. Contrôleur destiné à déterminer une position dent sur dent entre deux moitiés d'élément de commutation (10, 11) d'un élément de commutation (A, F) à complémentarité de formes, lesquelles peuvent être amenées en prise par complémentarité de formes l'une avec l'autre ou hors prise par déplacement d'au moins l'une des moitiés d'élément de commutation (10) en référence à l'autre moitié d'élément de commutation (11), pendant une fermeture de l'élément de commutation (A, F) à complémentarité de formes,
un mouvement de réglage de l'au moins une moitié d'élément de commutation (10) mobile en référence à l'autre moitié d'élément de commutation (11) en direction de la fermeture pendant le processus de fermeture étant surveillé au moyen d'un capteur auquel le contrôleur peut être relié par le biais d'une interface de réception,
le contrôleur étant réalisé de telle sorte qu'une position dent sur dent est reconnue,
lorsque, par le biais du capteur, à l'intérieur d'une plage de course de réglage de l'au moins une moitié d'élément de commutation (10) mobile entre un état ouvert et un état fermé de l'élément de commutation (A, F), il est déterminé
que le mouvement de réglage de l'au moins une moitié d'élément de commutation (10) mobile en direction de la fermeture est nul,
**caractérisé en ce que**
la position dent sur dent est reconnue lorsqu'en plus de cela, un rapport entre une force de fermeture appliquée à l'élément de commutation (A, F) et une force radiale s'exerçant au niveau des moitiés d'élément de commutation (10, 11),
laquelle résulte d'un couple appliqué à l'élément de commutation (A, F), se trouve à l'intérieur d'une plage de valeurs qui favorise la position dent sur dent et un mouvement de réglage de l'au moins une moitié d'élément de commutation (10) mobile en direction de la fermeture est reconnu par le biais du capteur après une réduction de la force de fermeture et/ou après une augmentation du couple appliqué,
la détermination de la plage de course de réglage entre les moitiés d'élément de commutation (10, 11) étant démarrée par le contrôleur lorsque
un mouvement de réglage de l'au moins une moitié d'élément de commutation (10) mobile en direction de la fermeture égal à zéro est identifié par le biais du capteur et
une évolution du signal du capteur au sein d'une période, laquelle est égale à une période prédéfinie ou plus longue que la période prédéfinie,
est égale ou supérieure à une valeur de seuil basse prédéfinie et inférieure ou égale à une valeur de seuil haute prédéfinie.

13. Produit de programme informatique, comprenant des instructions qui, lors de l'exécution du programme par un ordinateur, amènent celui-ci à exécuter toutes les étapes du procédé selon l'une des revendications 1 à 11.
